# EUROPÄISCHE PATENTANMELDUNG

(11) **EP 3 940 973 A1**
(43) Veröffentlichungstag der Anmeldung: **19.01.2022**
(21) Anmeldenummer: 21179511.7
(22) Anmeldetag: 15.06.2021
(51) Int. Cl.: H04J 14/04, H04B 10/07, G01M 11/00

(54) **EMPFANGSVORRICHTUNG UND VERFAHREN ZUM ERMITTELN VON ÜBERTRAGUNGSEIGENSCHAFTEN EINES OPTISCHEN WELLENLEITERS SOWIE VERFAHREN ZUM COMPUTERGESTÜTZTEN TRAINIEREN EINES NEURONALEN NETZWERKS**

(30) Priorität: 16.07.2020 DE 102020118871
(71) Anmelder: Technische Universität Dresden, 01069 Dresden (DE)
(72) Erfinder: ROTHE, Stefan, 01127 Dresden (DE); ZHANG, Qian, 01069 Dresden (DE); KOUKOURAKIS, Nektarios, 01705 Freital (DE); KUSCHMIERZ, Robert, 01099 Dresden (DE); CZARSKE, Jürgen, 01277 Dresden (DE)
(74) Vertreter: Viering, Jentschura & Partner mbB Patent- und Rechtsanwälte

(57) **Zusammenfassung**

Eine Empfangsvorrichtung und ein Verfahren zum Ermitteln von Übertragungseigenschaften eines optischen Wellenleiters werden offenbart, wobei die Empfangsvorrichtung (100) aufweist: eine Wellenleiter-Schnittstelle (102) zum Empfangen eines vermischten Lichtstrahls (104) mit einer Vielzahl von Moden von einem optischen Multimode-Wellenleiter und zum Empfangen eines vermischten verschobenen Lichtstrahls (106) von dem optischen Multimode-Wellenleiter, wobei der vermischte Lichtstrahl (104) für jede Mode der Vielzahl von Moden eine zugeordnete Phase aufweist und wobei der vermischte verschobene Lichtstrahl (106) für jede Mode der Vielzahl von Moden eine zugeordnete verschobene Phase aufweist; und ein oder mehrere Prozessoren (108) zum Ermitteln von Modeninformationen (114) für den vermischten Lichtstrahl (104) und von verschobenen Modeninformationen (116) für den vermischten verschobenen Lichtstrahl (106) unter Verwendung eines trainierten neuronalen Netzwerkes (110) und zum Ermitteln, für jede Mode der Vielzahl von Moden, der jeweils zugeordneten Phase (118) unter Verwendung der zugeordneten Phaseninformationen des Lichtstrahls und der zugeordneten verschobenen Phaseninformationen des verschobenen Lichtstrahls.

## Beschreibung

Verschiedene Ausführungsbeispiele betreffen eine Empfangsvorrichtung, ein Verfahren zum Ermitteln von Übertragungseigenschaften eines optischen Wellenleiters und ein Verfahren zum computergestützten Trainieren eines neuronalen Netzwerks.

Im Allgemeinen können Daten auf verschiedene Arten und Weisen übertragen werden, wobei die physikalische Schicht das Medium bzw. die Medien zur Datenübertragung definiert und/oder eine Schnittstelle zu diesen bereitstellt. Hierbei werden verschiedene Verfahren angewendet, um mittels der physikalischen Schicht die Informationssicherheit zu erhöhen. Daten können beispielsweise in Form von Licht mittels mehrmodigen optischen Wellenleitern übertragen werden. Bei der Übertragung von Lichtstrahlen mittels eines mehrmodigen optischen Wellenleiters überlagern, bzw. vermischen sich die Lichtstrahlen. Dies kann die Sicherheit der physikalischen Schicht erhöhen. Allerdings ist dabei erforderlich, dass die Übertragungseigenschaften des optischen Wellenleiters charakterisiert werden, zum Beispiel mittels einer Kalibrierung bei welcher die Transmissionseigenschaften des optischen Wellenleiters gemessen werden und in einer Transmissionsmatrix zusammengefasst werden. Die Transmissionseigenschaften werden beispielsweise mittels digitaler Holographie gemessen. Bei der digitalen Holographie werden die vermischten Lichtstrahlen auf einer Empfangsseite des optischen Wellenleiters mit einem separaten kohärenten Referenzlichtstrahl konstruktiv überlagert, sodass ein Interferenzmuster erzeugt wird, wobei die Transmissionsmatrix für das Interferenzmuster mittels eines Computeralgorithmus ermittelt wird. Somit ist bei der digitalen Holographie ein zusätzlicher optischer Pfad für den Referenzlichtstrahl notwendig. Daher kann es erforderlich sein, eine Empfangsvorrichtung und ein Verfahren zum Ermitteln von Übertragungseigenschaften eines optischen Wellenleiters bereitzustellen, die keinen Referenzlichtstrahl erfordern. Ferner kann es erforderlich sein, eine Empfangsvorrichtung und ein Verfahren zum Ermitteln von Übertragungseigenschaften eines optischen Wellenleiters bereitzustellen, mittels welcher eine Transmissionsmatrix mit verringertem rechentechnischen Aufwand ermittelt werden kann.

Gemäß verschiedenen Ausführungsformen werden eine Empfangsvorrichtung und ein Verfahren zum Ermitteln von Übertragungseigenschaften eines optischen Wellenleiters bereitgestellt, mittels denen eine Transmissionsmatrix ohne einen Referenzlichtstrahl und mit verringertem rechentechnischen Aufwand ermittelt werden kann.

Gemäß verschiedenen Ausführungsformen weist eine Empfangsvorrichtung auf: eine Wellenleiter-Schnittstelle, die eingerichtet ist zum: Empfangen eines vermischten Lichtstrahls von einem optischen Multimode-Wellenleiter, wobei der vermischte Lichtstrahl eine zumindest teilweise überlagerte Vielzahl von Lichtstrahlen aufweist, wobei jeder Lichtstrahl der Vielzahl von Lichtstrahlen eine zugeordnete Mode einer Vielzahl von Moden mit einer zugeordneten Amplitude und einer zugeordneten Phase aufweist, Empfangen eines vermischten verschobenen Lichtstrahls von dem optischen Multimode-Wellenleiter, wobei der vermischte verschobene Lichtstrahl eine zumindest teilweise überlagerte Vielzahl von verschobenen Lichtstrahlen aufweist, wobei jeder verschobene Lichtstrahl der Vielzahl von verschobenen Lichtstrahlen einem Lichtstrahl der Vielzahl von Lichtstrahlen zugeordnet ist, wobei der einem jeweiligen Lichtstrahl zugeordnete verschobene Lichtstrahl die zugeordnete Mode mit der zugeordneten Amplitude und einer zugeordneten verschobenen Phase aufweist, wobei die verschobene Phase von der Phase des Lichtstrahls verschieden ist; und ein oder mehrere Prozessoren, die eingerichtet sind zum: Ermitteln von Modeninformationen für den vermischten Lichtstrahl unter Verwendung eines trainierten neuronalen Netzwerkes, wobei die Modeninformationen für jede Mode der Vielzahl von Moden die zugeordnete Amplitude und zugeordnete Phaseninformationen aufweisen, Ermitteln von verschobenen Modeninformationen für den vermischten verschobenen Lichtstrahl unter Verwendung des trainierten neuronalen Netzwerkes, wobei die verschobenen Modeninformationen für jede Mode der Vielzahl von Moden die zugeordnete Amplitude und zugeordnete verschobene Phaseninformationen aufweisen, und Ermitteln, für jede Mode der Vielzahl von Moden, der jeweils zugeordneten Phase des Lichtstrahls unter Verwendung der zugeordneten Phaseninformationen des Lichtstrahls und der zugeordneten verschobenen Phaseninformationen des verschobenen Lichtstrahls.

Die Empfangsvorrichtung mit den Merkmalen des unabhängigen Anspruchs 1 bildet ein erstes Beispiel.

Das Ermitteln der Modeninformationen mittels des trainiertes neuronalen Netzwerkes kann dazu führen, dass kein Referenzlichtstrahl erforderlich ist. Damit ist kein zweiter optischer Wellenleiter erforderlich. Das Übertragenen von verschobenen Lichtstrahlen (z.B. phasenverschobenen Lichtstrahlen) in Kombination mit dem Ermitteln der verschobenen Modeninformationen kann dazu führen, dass die jeweilige Phase eines jeden Lichtstrahls mit vergleichsweise geringem rechentechnischen Aufwand ermittelt werden kann.

Die Empfangsvorrichtung kann ferner eine Bildgebungsvorrichtung aufweisen, die eingerichtet ist zum Bereitstellen von Lichtbilddaten für den empfangenen vermischten Lichtstrahl. Die in diesem Absatz beschriebenen Merkmale in Kombination mit dem ersten Beispiel bilden ein zweites Beispiel.

Das Ermitteln von Modeninformationen für den vermischten Lichtstrahl kann ein Ermitteln von Modeninformationen für die Lichtbilddaten unter Verwendung des trainierten neuronalen Netzwerkes aufweisen. Die in diesem Absatz beschriebenen Merkmale in Kombination mit dem zweiten Beispiel bilden ein drittes Beispiel.

Die Lichtbilddaten können reellwertige Intensitätsverteilungen aufweisen. Die in diesem Absatz beschriebenen Merkmale in Kombination mit dem zweiten Beispiel oder dem dritten Beispiel bilden ein viertes Beispiel.

Die Bildgebungsvorrichtung kann ferner eingerichtet sein zum Bereitstellen von verschobenen Lichtbilddaten für den empfangenen vermischten verschobenen Lichtstrahl. Die in diesem Absatz beschriebenen Merkmale in Kombination mit einem oder mehreren des zweiten Beispiels bis dem vierten Beispiel bilden ein fünftes Beispiel.

Das Ermitteln von verschobenen Modeninformationen für den vermischten verschobenen Lichtstrahl kann ein Ermitteln von verschobenen Modeninformationen für die verschobenen Lichtbilddaten unter Verwendung des trainierten neuronalen Netzwerkes aufweisen. Die in diesem Absatz beschriebenen Merkmale in Kombination mit dem fünften Beispiel bilden ein sechstes Beispiel.

Die verschobenen Lichtbilddaten können reellwertige Intensitätsverteilungen (z.B. Amplitudenbilder mit reellwertigen Intensitätsverteilungen) aufweisen. Das in diesem Absatz beschriebene Merkmal in Kombination mit dem fünften Beispiel oder dem sechsten Beispiel bildet ein siebtes Beispiel.

Jeder Lichtstrahl der Vielzahl von Lichtstrahlen kann eine jeweilige erste Frequenz aufweisen und der einem jeweiligen Lichtstrahl zugeordnete verschobene Lichtstrahl kann eine zweite Frequenz aufweisen, wobei die zweite Frequenz von der ersten Frequenz verschieden ist. Die in diesem Absatz beschriebenen Merkmale in Kombination mit einem oder mehreren des ersten Beispiels bis dem siebten Beispiel bilden ein achtes Beispiel.

Die Phaseninformationen eines jeweiligen Lichtstrahls der Vielzahl von Lichtstrahlen können einen Kosinuswert der zugeordneten Phase aufweisen. Die in diesem Absatz beschriebenen Merkmale in Kombination mit einem oder mehreren des ersten Beispiels bis dem achten Beispiel bilden ein neuntes Beispiel.

Die verschobenen Phaseninformationen eines jeweiligen verschobenen Lichtstrahls der Vielzahl von verschobenen Lichtstrahlen können einen Kosinuswert der zugeordneten verschobenen Phase aufweisen. Die in diesem Absatz beschriebenen Merkmale in Kombination mit einem oder mehreren des ersten Beispiels bis dem neunten Beispiel bilden ein zehntes Beispiel.

Das Ermitteln, für jede Mode der Vielzahl von Moden, der jeweils zugeordneten Phase des Lichtstrahls unter Verwendung der zugeordneten Phaseninformationen des Lichtstrahls und der zugeordneten verschobenen Phaseninformationen des verschobenen Lichtstrahls kann ein Ermitteln, für jede Mode der Vielzahl von Moden, der jeweils zugeordneten Phase des Lichtstrahls unter Verwendung des Kosinuswerts der zugeordneten Phase des Lichtstrahls und des Kosinuswerts der zugeordneten verschobenen Phase des verschobenen Lichtstrahls aufweisen. Die in diesem Absatz beschriebenen Merkmale in Kombination mit dem neunten Beispiel und dem zehnten Beispiel bilden ein elftes Beispiel.

Das Ermitteln, für jede Mode der Vielzahl von Moden, der jeweils zugeordneten Phase des Lichtstrahls unter Verwendung des Kosinuswerts der zugeordneten Phase des Lichtstrahls und des Kosinuswerts der zugeordneten verschobenen Phase des verschobenen Lichtstrahls kann ein Ermitteln, für jede Mode der Vielzahl von Moden, der jeweils zugeordneten Phase des Lichtstrahls unter Verwendung einer Richtungsänderung zwischen dem Kosinuswert der zugeordneten Phase des Lichtstrahls und dem Kosinuswert der zugeordneten verschobenen Phase des verschobenen Lichtstrahls aufweist. Die in diesem Absatz beschriebenen Merkmale in Kombination mit dem elften Beispiel bilden ein zwölftes Beispiel.

Die jeweils zugeordnete Phase des Lichtstrahls kann für den Kosinuswert der zugeordneten Phase des Lichtstrahls mittels der Arkuskosinus-Funktion ermittelt werden, und die Richtungsänderung kann das Vorzeichen der Arkuskosinus-Funktion angeben. Die in diesem Absatz beschriebenen Merkmale in Kombination mit dem zwölften Beispiel bilden ein dreizehntes Beispiel.

Die Vielzahl von Moden kann eine Grundmode aufweisen, wobei die Phase der Grundmode gleich "0" ist. Die in diesem Absatz beschriebenen Merkmale in Kombination mit einem oder mehreren des ersten Beispiels bis dem dreizehnten Beispiel bilden ein vierzehntes Beispiel.

Die Phaseninformationen können für jede Mode der Vielzahl von Moden relative Phaseninformationen in Bezug auf die Grundmode aufweisen. Die in diesem Absatz beschriebenen Merkmale in Kombination mit dem vierzehnten Beispiel bilden ein fünfzehntes Beispiel. Das hat den Effekt, dass auf Informationen bezüglich der Phase am Eingang des neuronalen Netzwerks verzichtet werden kann. Zum Beispiel kann das trainierte neuronale Netzwerk Amplitudenbilder verarbeiten, welche Informationen zu Amplituden der überlagerten Vielzahl von Lichtstrahlen aufweisen können und keine Informationen zu Phasen der überlagerten Vielzahl von Lichtstrahlen aufweisen können.

Die verschobenen Phaseninformationen können für jede Mode der Vielzahl von Moden relative Phaseninformationen in Bezug auf die Grundmode aufweisen. Die in diesem Absatz beschriebenen Merkmale in Kombination mit dem vierzehnten Beispiel oder dem fünfzehnten Beispiel bilden ein sechzehntes Beispiel.

Ein System kann eine Empfangsvorrichtung nach einem oder mehreren des ersten Beispiels bis dem sechzehnten Beispiel aufweisen. Das System kann ferner einen optischen Multimode-Wellenleiter aufweisen und kann eine Sendevorrichtung aufweisen, die eingerichtet ist, um die Vielzahl von Lichtstrahlen an den optischen Multimode-Wellenleiter bereitzustellen, und um die Vielzahl von verschobenen Lichtstrahlen an den optischen Multimode-Wellenleiter bereitzustellen. Das in diesem Absatz beschriebene System bildet ein siebzehntes Beispiel.

Die Sendevorrichtung kann aufweisen: eine Erzeugungsvorrichtung, die eingerichtet ist zum Bereitstellen der Vielzahl von Lichtstrahlen; eine Verschiebungsvorrichtung, die eingerichtet ist, um für jeden Lichtstrahl der Vielzahl von Lichtstrahlen den jeweiligen verschobenen Lichtstrahl der Vielzahl von verschobenen Lichtstrahlen bereitzustellen; und eine Wellenleiter-Schnittstelle, die eingerichtet ist, um die Vielzahl von Lichtstrahlen an den optischen Multimode-Wellenleiter bereitzustellen, und um die Vielzahl von verschobenen Lichtstrahlen an den optischen Multimode-Wellenleiter bereitzustellen. Die in diesem Absatz beschriebenen Merkmale in Kombination mit dem siebzehnten Beispiel bilden ein achtzehntes Beispiel.

Die Erzeugungsvorrichtung kann eine Initial-Lichtstrahl-Erzeugungsvorrichtung und eine Modulationsvorrichtung aufweisen, wobei die Initial-Lichtstrahl-Erzeugungsvorrichtung eingerichtet ist zum Erzeugen eines Initial-Lichtstrahls, und wobei die Modulationsvorrichtung eingerichtet ist zum Erzeugen der Vielzahl von Lichtstrahlen für den Initial-Lichtstrahl. Die in diesem Absatz beschriebenen Merkmale in Kombination mit dem achtzehnten Beispiel bilden ein neunzehntes Beispiel.

Die Verschiebungsvorrichtung kann einen akustooptischen Modulator aufweisen. Das in diesem Absatz beschriebene Merkmal in Kombination mit dem achtzehnten Beispiel oder dem neunzehnten Beispiel bildet ein zwanzigstes Beispiel.

Ein System kann aufweisen: eine Sendevorrichtung, die eingerichtet ist zum: Bereitstellen einer Vielzahl von Lichtstrahlen, wobei jeder Lichtstrahl der Vielzahl von Lichtstrahlen eine zugeordnete Mode einer Vielzahl von Moden mit einer zugeordneten Amplitude und einer zugeordneten Phase aufweist, und für jeden Lichtstrahl der Vielzahl von Lichtstrahlen, Bereitstellen eines verschobenen Lichtstrahls, wobei der verschobene Lichtstrahl die zugeordnete Mode mit der zugeordneten Amplitude und einer zugeordneten verschobenen Phase aufweist, wobei die verschobene Phase von der Phase des Lichtstrahls verschieden ist; einen optischen Wellenleiter, der eingerichtet ist, um die Vielzahl von Lichtstrahlen derart zu übertragen, dass sich Lichtstrahlen der Vielzahl von Lichtstrahlen zumindest teilweise zu einem vermischten Lichtstrahl überlagern, und um die Vielzahl von verschobenen Lichtstrahlen derart zu übertragen, dass sich die verschobenen Lichtstrahlen der Vielzahl von verschobenen Lichtstrahlen zumindest teilweise zu einem vermischten verschobenen Lichtstrahl überlagern; eine Empfangsvorrichtung, die eingerichtet ist zum: Empfangen des von dem optischen Wellenleiter übertragenen vermischten Lichtstrahls, und Empfangen des von dem optischen Wellenleiter übertragenen vermischten verschobenen Lichtstrahls; ein oder mehrere Prozessoren, die eingerichtet sind zum: Ermitteln von Modeninformationen für den empfangenen Lichtstrahl unter Verwendung eines trainierten neuronalen Netzwerkes, wobei die Modeninformationen für jede Mode der Vielzahl von Moden die zugeordnete Amplitude und zugeordnete Phaseninformationen aufweisen; Ermitteln von verschobenen Modeninformationen für den empfangenen verschobenen Lichtstrahl unter Verwendung des trainierten neuronalen Netzwerkes, wobei die verschobenen Modeninformationen für jede Mode der Vielzahl von Moden die zugeordnete Amplitude und zugeordnete verschobene Phaseninformationen aufweisen; Ermitteln, für jede Mode der Vielzahl von Moden, die jeweils zugeordnete Phase des Lichtstrahls unter Verwendung der zugeordneten Phaseninformationen des Lichtstrahls und der zugeordneten verschobenen Phaseninformationen des verschobenen Lichtstrahls. Das in diesem Absatz beschriebene System bildet ein einundzwanzigstes Beispiel.

Ein Verfahren zum Ermitteln von Übertragungseigenschaften eines optischen Wellenleiters kann aufweisen: Bereitstellen eines mittels des optischen Wellenleiters übertragenen vermischten Lichtstrahls, wobei der vermischte Lichtstrahl eine zumindest teilweise überlagerte Vielzahl von Lichtstrahlen aufweist, wobei jeder Lichtstrahl der Vielzahl von Lichtstrahlen eine zugeordnete Mode einer Vielzahl von Moden mit einer zugeordneten Amplitude und einer zugeordneten Phase aufweist; Ermitteln, mittels eines trainierten neuronalen Netzwerkes, von Modeninformationen für den empfangenen vermischten Lichtstrahl, wobei die Modeninformationen für jede Mode der Vielzahl von Moden die zugeordnete Amplitude und zugeordnete Phaseninformationen aufweisen; Bereitstellen eines mittels des optischen Wellenleiters übertragenen vermischten verschobenen Lichtstrahls, wobei der vermischte verschobene Lichtstrahl eine zumindest teilweise überlagerte Vielzahl von verschobenen Lichtstrahlen aufweist, wobei jeder verschobene Lichtstrahl der Vielzahl von verschobenen Lichtstrahlen einem Lichtstrahl der Vielzahl von Lichtstrahlen zugeordnet ist, wobei der einem jeweiligen Lichtstrahl zugeordnete verschobene Lichtstrahl die zugeordnete Mode mit der zugeordneten Amplitude und einer zugeordneten verschobenen Phase aufweist, wobei die verschobene Phase von der Phase des Lichtstrahls verschieden ist; Ermitteln, mittels des trainierten neuronalen Netzwerkes, von verschobenen Modeninformationen für den vermischten verschobenen Lichtstrahl, wobei die verschobenen Modeninformationen für jede Mode der Vielzahl von Moden die zugeordnete Amplitude und zugeordnete verschobene Phaseninformationen aufweisen; und Ermitteln, für jede Mode der Vielzahl von Moden, die jeweils zugeordnete Phase des Lichtstrahls unter Verwendung der zugeordneten Phaseninformationen des Lichtstrahls und der zugeordneten verschobenen Phaseninformationen des verschobenen Lichtstrahls. Das in diesem Absatz beschriebene Verfahren bildet ein zweiundzwanzigstes Beispiel.

Ein Verfahren zum Ermitteln von Übertragungseigenschaften eines optischen Wellenleiters kann aufweisen: Empfangen eines vermischten Lichtstrahls von dem optischen Wellenleiter, wobei der vermischte Lichtstrahl eine zumindest teilweise überlagerte Vielzahl von Lichtstrahlen aufweist, wobei jeder Lichtstrahl der Vielzahl von Lichtstrahlen eine zugeordnete Mode einer Vielzahl von Moden mit einer zugeordneten Amplitude und einer zugeordneten Phase aufweist; Ermitteln, mittels eines trainierten neuronalen Netzwerkes, von Modeninformationen für den empfangenen vermischten Lichtstrahl, wobei die Modeninformationen für jede Mode der Vielzahl von Moden die zugeordnete Amplitude und zugeordnete Phaseninformationen aufweisen; Empfangen eines vermischten verschobenen Lichtstrahls von dem optischen Wellenleiter, wobei der vermischte verschobene Lichtstrahl eine zumindest teilweise überlagerte Vielzahl von verschobenen Lichtstrahlen aufweist, wobei jeder verschobene Lichtstrahl der Vielzahl von verschobenen Lichtstrahlen einem Lichtstrahl der Vielzahl von Lichtstrahlen zugeordnet ist, wobei der einem jeweiligen Lichtstrahl zugeordnete verschobene Lichtstrahl die zugeordnete Mode mit der zugeordneten Amplitude und einer zugeordneten verschobenen Phase aufweist, wobei die verschobene Phase von der Phase des Lichtstrahls verschieden ist; Ermitteln, mittels des trainierten neuronalen Netzwerkes, von verschobenen Modeninformationen für den vermischten verschobenen Lichtstrahl, wobei die verschobenen Modeninformationen für jede Mode der Vielzahl von Moden die zugeordnete Amplitude und zugeordnete verschobene Phaseninformationen aufweisen; und Ermitteln, für jede Mode der Vielzahl von Moden, die jeweils zugeordnete Phase des Lichtstrahls unter Verwendung der zugeordneten Phaseninformationen des Lichtstrahls und der zugeordneten verschobenen Phaseninformationen des verschobenen Lichtstrahls. Das in diesem Absatz beschriebene Verfahren bildet ein dreiundzwanzigstes Beispiel.

Ein Verfahren zum Ermitteln von Übertragungseigenschaften eines optischen Wellenleiters kann aufweisen: Übertragen einer Vielzahl von Lichtstrahlen mittels des optischen Wellenleiters, wobei jeder Lichtstrahl der Vielzahl von Lichtstrahlen eine zugeordnete Mode einer Vielzahl von Moden mit einer zugeordneten Amplitude und einer zugeordneten Phase aufweist, wobei sich die übertragenen Lichtstrahlen zumindest teilweise zu einem vermischten Lichtstrahl überlagern; Empfangen des vermischten Lichtstrahls, wobei der empfangene vermischte Lichtstrahl die Vielzahl von Moden aufweist; Ermitteln, mittels eines trainierten neuronalen Netzwerkes, von Modeninformationen für den empfangenen vermischten Lichtstrahl, wobei die Modeninformationen für jede Mode der Vielzahl von Moden die zugeordnete Amplitude und zugeordnete Phaseninformationen aufweisen; für jeden Lichtstrahl der Vielzahl von Lichtstrahlen, Erzeugen eines verschobenen Lichtstrahls, wobei der verschobene Lichtstrahl die zugeordnete Mode mit der zugeordneten Amplitude und einer zugeordneten verschobenen Phase aufweist, wobei die verschobene Phase des verschobenen Lichtstrahls von der Phase des Lichtstrahls verschieden ist; Übertragen der Vielzahl von verschobenen Lichtstrahlen mittels des optischen Wellenleiters, wobei sich die übertragenen verschobenen Lichtstrahlen zumindest teilweise zu einem vermischten verschobenen Lichtstrahl überlagern; Empfangen des vermischten verschobenen Lichtstrahls, wobei der vermischte verschobene Lichtstrahl die Vielzahl von Moden aufweist; Ermitteln, mittels des trainierten neuronalen Netzwerkes, von verschobenen Modeninformationen für den vermischten verschobenen Lichtstrahl, wobei die verschobenen Modeninformationen für jede Mode der Vielzahl von Moden die zugeordnete Amplitude und zugeordnete verschobene Phaseninformationen aufweisen; und Ermitteln, für jede Mode der Vielzahl von Moden, die jeweils zugeordnete Phase des Lichtstrahls unter Verwendung der zugeordneten Phaseninformationen des Lichtstrahls und der Phaseninformationen der zugeordneten verschobenen Phaseninformationen des verschobenen Lichtstrahls.

Eine Vorrichtung kann eingerichtet sein, um das Verfahren nach einem oder mehreren des zweiundzwanzigsten Beispiels bis dem vierundzwanzigsten Beispiel auszuführen. Die in diesem Absatz beschriebene Vorrichtung bildet ein fünfundzwanzigstes Beispiel.

Ein Computerprogrammprodukt kann Programminstruktionen speichern, welche, wenn sie ausgeführt werden, das Verfahren nach einem oder mehreren des zweiundzwanzigsten Beispiels bis dem vierundzwanzigsten Beispiel auszuführen. Das in diesem Absatz beschriebene Computerprogrammprodukt bildet ein sechsundzwanzigstes Beispiel.

Ein Verfahren zum computergestützten Trainieren eines neuronalen Netzwerkes kann aufweisen: Bereitstellen einer Vielzahl von ersten Amplitudenbildern, wobei jedem ersten Amplitudenbild der Vielzahl von ersten Amplitudenbildern eine erste Vielzahl von Moden zugeordnet ist, wobei, für jedes erste Amplitudenbild der Vielzahl von ersten Amplitudenbildern, einer jeden Mode der ersten Vielzahl von Moden eine jeweilige Amplitude und eine jeweilige Phase zugeordnet ist; Ermitteln, mittels des neuronalen Netzwerkes, von Modeninformationen für jedes erste Amplitudenbild der Vielzahl von ersten Amplitudenbildern, wobei die Modeninformationen für jede Mode der ersten Vielzahl von Moden eine ermittelte zugeordnete Amplitude und ermittelte zugeordnete Phaseninformationen aufweisen; Vortrainieren des neuronalen Netzwerkes, für jedes erste Amplitudenbild der Vielzahl von ersten Amplitudenbildern, unter Verwendung der für die erste Vielzahl von Moden bereitgestellten Amplituden und bereitgestellten Phasen und der für die erste Vielzahl von Moden ermittelten Amplituden und ermittelten Phaseninformationen; Bereitstellen einer Vielzahl von zweiten Amplitudenbildern, wobei jedem zweiten Amplitudenbild der Vielzahl von zweiten Amplitudenbildern eine zweite Vielzahl von Moden zugeordnet ist, wobei die zweite Vielzahl von Moden die erste Vielzahl von Moden und mindestens eine zusätzliche Mode aufweist, wobei, für jedes zweite Amplitudenbild der Vielzahl von zweiten Amplitudenbildern, einer jeden Mode der zweiten Vielzahl von Moden eine jeweilige Amplitude und eine jeweilige Phase zugeordnet ist; Ermitteln, mittels des neuronalen Netzwerkes, von Modeninformationen für jedes zweite Amplitudenbild der Vielzahl von zweiten Amplitudenbildern, wobei die Modeninformationen für jede Mode der zweiten Vielzahl von Moden eine ermittelte zugeordnete Amplitude und ermittelte zugeordnete Phaseninformationen; und Trainieren des neuronalen Netzwerkes, für jedes zweite Amplitudenbild der Vielzahl von zweiten Amplitudenbildern, unter Verwendung der für die zweite Vielzahl von Moden bereitgestellten Amplituden und bereitgestellten Phasen und der für die zweite Vielzahl von Moden ermittelten Amplituden und ermittelten Phaseninformationen. Das in diesem Absatz beschriebene Verfahren bildet ein siebenundzwanzigstes Beispiel.

Eine Trainingsvorrichtung kann eingerichtet sein, um das Verfahren nach dem siebenundzwanzigsten Beispiel auszuführen. Die in diesem Absatz beschriebene Trainingsvorrichtung bildet ein achtundzwanzigstes Beispiel.

Ein Computerprogrammprodukt kann Programminstruktionen speichern, welche, wenn sie ausgeführt werden, das Verfahren nach dem siebenundzwanzigsten Beispiel auszuführen. Das in diesem Absatz beschriebene Computerprogrammprodukt bildet ein neunundzwanzigstes Beispiel.

Ein Sendevorrichtung kann aufweisen: eine Lichtstrahl-Erzeugungsvorrichtung, die eingerichtet ist zum Bereitstellen einer Vielzahl von Lichtstrahlen, wobei jeder Lichtstrahl der Vielzahl von Lichtstrahlen eine zugeordnete Mode einer Vielzahl von Moden mit einer zugeordneten Amplitude und einer zugeordneten Phase aufweist; eine Verschiebungsvorrichtung, die eingerichtet ist, um für jeden Lichtstrahl der Vielzahl von Lichtstrahlen einen jeweiligen verschobenen Lichtstrahl bereitzustellen, wobei der einem jeweiligen Lichtstrahl zugeordnete verschobene Lichtstrahl die zugeordnete Mode mit der zugeordneten Amplitude und einer zugeordneten verschobenen Phase aufweist, wobei die verschobene Phase von der Phase des Lichtstrahls verschieden ist; und eine Wellenleiter-Schnittstelle, die eingerichtet ist, um die Vielzahl von Lichtstrahlen an einen optischen Multimode-Wellenleiter bereitzustellen, und um die Vielzahl von verschobenen Lichtstrahlen an den optischen Multimode-Wellenleiter bereitzustellen. Die in diesem Absatz beschriebene Sendevorrichtung bildet ein dreißigstes Beispiel.

Es zeigen
- Figuren 1A und 1B: eine Empfangsvorrichtung gemäß verschiedenen Ausführungsformen;
- Figur 2: ein System gemäß verschiedenen Ausführungsformen;
- Figuren 3A und 3B: eine Sendevorrichtung gemäß verschiedenen Ausführungsformen;
- Figur 4: eine Erzeugungsvorrichtung gemäß verschiedenen Ausführungsformen;
- Figur 5: ein System gemäß verschiedenen Ausführungsformen;
- Figur 6: ein Verfahren zum Ermitteln von Übertragungseigenschaften eines optischen Wellenleiters gemäß verschiedenen Ausführungsformen;
- Figuren 7A und 7B: eine Trainingsvorrichtung gemäß verschiedenen Ausführungsformen;
- Figur 8A: ein neuronales Netzwerk gemäß verschiedenen Ausführungsformen;
- Figuren 8B bis 8G: jeweils beispielhafte Elemente eines neuronalen Netzwerks gemäß verschiedenen Ausführungsformen;
- Figur 9: ein Verfahren zum computergestützten Trainieren eines neuronalen Netzwerks gemäß verschiedenen Ausführungsformen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann.

Der Begriff "Prozessor" kann als jede Art von Entität verstanden werden, die die Verarbeitung von Daten oder Signalen erlaubt. Die Daten oder Signale können beispielsweise gemäß zumindest einer (d.h. einer oder mehr als einer) spezifischen Funktion behandelt werden, die vom Prozessor ausgeführt wird. Ein Prozessor kann eine analoge Schaltung, eine digitale Schaltung, eine Mischsignalschaltung, eine Logikschaltung, einen Mikroprozessor, eine zentrale Verarbeitungseinheit (CPU), eine Grafikverarbeitungseinheit (GPU), einen digitalen Signalprozessor (DSP), eine programmierbare Gatter-Anordnung (FPGA), eine integrierte Schaltung oder eine beliebige Kombination davon aufweisen oder daraus gebildet sein. Jede andere Art der Implementierung der jeweiligen Funktionen, die nachstehend ausführlicher beschrieben werden, kann auch als Prozessor oder Logikschaltung verstanden werden. Es versteht sich, dass einer oder mehrere der hierin detailliert beschriebenen Verfahrensschritte von einem Prozessor ausgeführt (z.B. realisiert) werden können, durch eine oder mehrere spezifische Funktionen, die von dem Prozessor ausgeführt werden. Der Prozessor kann daher eingerichtet sein, eines der hierin beschriebenen Verfahren oder dessen Komponenten zur Informationsverarbeitung durchzuführen.

Angreifer können mittels verschiedener Methoden auf übermittelte Daten zugreifen. Um die Informationssicherheit zu erhöhen kann beispielsweise eine Sicherheit der physikalischen Schicht bereitgestellt werden, wie zum Beispiel bei einer Datenübertragung von Licht mittels eines mehrmodigen optischen Wellenleiters. Allerdings ist es hierbei notwendig, die Übertragungseigenschaften des mehrmodigen optischen Wellenleiters zu ermitteln. Verschiedene Ausführungsformen betreffen eine Empfangsvorrichtung und ein Verfahren mittels denen die Übertragungseigenschaften eines optischen Wellenleiters effizient ermittelt werden, indem mittels eines neuronalen Netzwerkes die Amplituden und die Beträge der Phasen von übertragenen Lichtstrahlen ermittelt werden und indem die jeweiligen Vorzeichen der Phasen unter Verwendung von phasenverschobenen Lichtstrahlen ermittelt werden.

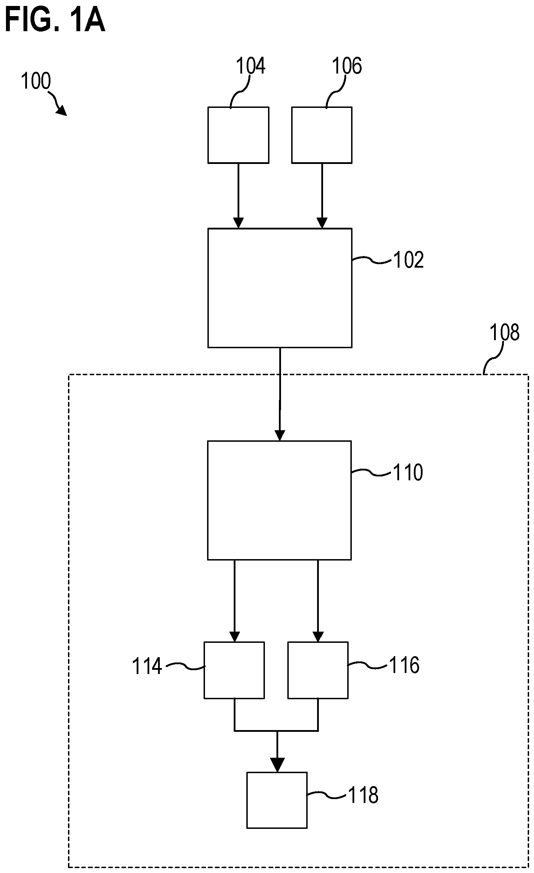

**FIG. 1A** zeigt eine Empfangsvorrichtung 100 gemäß verschiedenen Ausführungsformen. Die Empfangsvorrichtung 100 kann eine Wellenleiter-Schnittstelle 102 aufweisen. Die Wellenleiter-Schnittstelle 102 kann eingerichtet sein, um mindestens einen Lichtstrahl von einem optischen Wellenleiter zu empfangen. Beispielsweise kann die Wellenleiter-Schnittstelle 102 eingerichtet sein, mindestens einen Lichtstrahl von einem optischen Multimode-Wellenleiter zu empfangen. Ein Multimode-Wellenleiter kann beispielsweise eingerichtet sein, um eine Vielzahl von Lichtstrahlen mit einer jeweiligen Mode zu übertragen. Anschaulich kann der Multimode-Wellenleiter Lichtstrahlen mit mehreren Moden übertragen. Der Multimode-Wellenleiter kann ferner eingerichtet sein, um die Vielzahl von Lichtstrahlen derart zu übertragen, dass sich die Lichtstrahlen der Vielzahl von Lichtstrahlen zumindest teilweise überlagern. Beispielsweise kann der Multimode-Wellenleiter anschaulich die Vielzahl von Lichtstrahlen überlagern und der Empfangsvorrichtung 100 einen vermischten Lichtstrahl bereitstellen.

Gemäß verschiedenen Ausführungsformen kann die Wellenleiter-Schnittstelle 102 eingerichtet sein zum Empfangen eines vermischten Lichtstrahls 104, beispielsweise von einem optischen Multimode-Wellenleiter. Der vermischte Lichtstrahl 104 kann eine zumindest teilweise überlagerte Vielzahl von Lichtstrahlen aufweisen. Beispielsweise kann der optische Multimode-Wellenleiter die Vielzahl von Lichtstrahlen bei der Übertragung zu dem vermischten Lichtstrahl 104 überlagern. Jeder Lichtstrahl der Vielzahl von Lichtstrahlen kann eine zugeordnete Mode einer Vielzahl von Moden (z.B. mehr als drei Moden, z.B. mehr als fünf Moden, z.B. mehr als zehn Moden, z.B. mehr als 25 Moden, z.B. mehr als 50 Moden, z.B. mehr als 55 Moden, z.B. in einem Bereich von 50 bis 100 Moden) aufweisen. Beispielsweise kann jeder Lichtstrahl der Vielzahl von Lichtstrahlen eineindeutig /z.B. bijektiv) eine Mode der Vielzahl von Moden aufweisen. Der vermischte Lichtstrahl 104 kann eine Modenmischung aufweisen. Zum Beispiel kann jeder Lichtstrahl der Vielzahl von Lichtstrahlen eine Mode der Vielzahl von Moden aufweisen, wobei die Mode von den anderen Moden der Vielzahl von Moden verschieden ist. Jede Mode der Vielzahl von Moden kann eine zugeordnete Amplitude und eine zugeordnete Phase (z.B. optische Phase) des jeweiligen Lichtstrahls der Vielzahl von Lichtstrahlen aufweisen. Anschaulich kann jeder Lichtstrahl der Vielzahl von Lichtstrahlen eine zugeordnete Amplitude und eine zugeordnete Phase aufweisen, wobei die zugeordneten Amplituden und/oder die zugeordneten Phasen von ein oder mehreren Lichtstrahlen der Vielzahl von Lichtstrahlen von denen der anderen Lichtstrahlen der Vielzahl von Lichtstrahlen verschieden sind. Anschaulich können die Lichtstrahlen der Vielzahl von Lichtstrahlen verschiedene Amplituden und/oder verschiedene Phasen aufweisen.

Gemäß verschiedenen Ausführungsformen kann die Vielzahl von Lichtstrahlen eine Grundmode aufweisen. Beispielsweise kann ein Lichtstrahl der Vielzahl von Lichtstrahlen die Grundmode aufweisen. Die Phase der Grundmode kann gleich "0" sein.

Gemäß verschiedenen Ausführungsformen kann die Wellenleiter-Schnittstelle 102 eingerichtet sein zum Empfangen eines vermischten verschobenen Lichtstrahls 106, beispielsweise von dem optischen Multimode-Wellenleiter. Der vermischte verschobene Lichtstrahl 106 kann eine zumindest teilweise überlagerte Vielzahl von verschobenen Lichtstrahlen aufweisen. Beispielsweise kann der optische Multimode-Wellenleiter die Vielzahl von verschobenen Lichtstrahlen bei der Übertragung zu dem vermischten verschobenen Lichtstrahl 106 überlagern. Jeder verschobene Lichtstrahl der Vielzahl von verschobenen Lichtstrahlen kann einem Lichtstrahl der Vielzahl von Lichtstrahlen zugeordnet sein. Beispielsweise kann jeder verschobene Lichtstrahl der Vielzahl von verschobenen Lichtstrahlen genau einem Lichtstrahl der Vielzahl von Lichtstrahlen (z.B. bijektiv) zugeordnet sein. Der einem jeweiligen Lichtstrahl der Vielzahl von Lichtstrahlen zugeordnete verschobene Lichtstrahl kann die zugeordnete Mode der Vielzahl von Moden aufweisen. Der einem jeweiligen Lichtstrahl der Vielzahl von Lichtstrahlen zugeordnete verschobene Lichtstrahl kann für die zugeordnete Mode die zugeordnete Amplitude des Lichtstrahls aufweisen. Beispielsweise kann die Amplitude eines verschobenen Lichtstrahls der Vielzahl von verschobenen Lichtstrahlen der Amplitude des zugeordneten Lichtstrahls im Wesentlichen entsprechen. Der einem jeweiligen Lichtstrahl der Vielzahl von Lichtstrahlen zugeordnete verschobene Lichtstrahl kann für die zugeordnete Mode eine zugeordnete verschobene Phase des verschobenen Lichtstrahls aufweisen. Die verschobene Phase eines jeweiligen verschobenen Lichtstrahls kann von der Phase des zugeordneten Lichtstrahls verschieden sein. Anschaulich kann ein jeweiliger verschobener Lichtstrahl der Vielzahl von verschobenen Lichtstrahlen phasenverschoben bezüglich des zugeordneten Lichtstrahls sein.

Jeder Lichtstrahl der Vielzahl von Lichtstrahlen kann eine erste Frequenz aufweisen. Jeder verschobene Lichtstrahl der Vielzahl von verschobenen Lichtstrahlen kann eine von der ersten Frequenz des zugeordneten Lichtstrahls verschiedene zweite Frequenz aufweisen.

Gemäß verschiedenen Ausführungsformen kann die Empfangsvorrichtung 100 ein oder mehrere Prozessoren 108 aufweisen. Die ein oder mehreren Prozessoren 108 (in verschiedenen Aspekten als Prozessor 108 bezeichnet) können wie oben beschrieben jede Art von Logik implementierender Entität aufweisen. Der Prozessor 108 kann Logik zum Beispiel unter Verwendung einer Speichervorrichtung implementieren und/oder kann unter Verwendung der Speichervorrichtung Daten verarbeiten.

Der Prozessor 108 kann ein trainiertes neuronales Netzwerk 110 implementieren. Der Prozessor 108 kann eingerichtet sein, um den von der Wellenleiter-Schnittstelle 102 empfangenen vermischten Lichtstrahl 104 zu verarbeiten. Der Prozessor 108 kann eingerichtet sein, um den von der Wellenleiter-Schnittstelle 102 empfangenen vermischten verschobenen Lichtstrahl 106 zu verarbeiten. Der Prozessor 108 kann eingerichtet sein, um den empfangenen vermischten Lichtstrahl 104 und/oder den empfangenen vermischten verschobenen Lichtstrahl 106 unter Verwendung des trainierten neuronalen Netzwerks 110 zu verarbeiten.

Das trainierte neuronale Netzwerk 110 kann eingerichtet sein zum Ermitteln von Modeninformationen 114 für den vermischten Lichtstrahl 104. Die Modeninformationen 114 können für jede Mode der Vielzahl von Moden die zugeordnete Amplitude und zugeordnete Phaseninformationen aufweisen. Die jeweiligen Phaseninformationen können die zugeordnete Phase des jeweiligen Lichtstrahls der Vielzahl von Lichtstrahlen charakterisieren. Anschaulich können Lichtstrahlen mit einer jeweiligen Amplitude und einer jeweiligen Phase sequentiell erzeugt und mittels eines optischen Wellenleiters übertragen werden und der vermischte Lichtstrahl 104 kann mittels des trainieren neuronalen Netzwerks 110 ausgewertet werden.

Das trainierte neuronale Netzwerk 110 kann eingerichtet sein zum Ermitteln von verschobenen Modeninformationen 116 für den vermischten verschobenen Lichtstrahl 106. Die verschobenen Modeninformationen 116 können für jede Mode der Vielzahl von Moden die zugeordnete Amplitude und zugeordnete verschobene Phaseninformationen aufweisen. Die jeweiligen verschobenen Phaseninformationen können die zugeordnete verschobene Phase des jeweiligen verschobenen Lichtstrahls der Vielzahl von verschobenen Lichtstrahlen charakterisieren.

Wie oben beschrieben, kann die Vielzahl von Lichtstrahlen die Grundmode aufweisen. Gemäß verschiedenen Ausführungsformen können die Phaseninformationen eines jeweiligen Lichtstrahls relative Phaseninformationen in Bezug auf die Grundmode sein. Die verschobenen Phaseninformationen eines jeweiligen verschobenen Lichtstrahls können relative verschobene Phaseninformationen in Bezug auf die Grundmode sein.

Der Prozessor 108 kann eingerichtet sein zum Ermitteln der zugeordneten Phase 118 für jeden Lichtstrahl der Vielzahl von Lichtstrahlen. Der Prozessor 108 kann eingerichtet sein zum Ermitteln der zugeordneten Phase 118 für jeden Lichtstrahl der Vielzahl von Lichtstrahlen unter Verwendung der zugeordneten Phaseninformationen des jeweiligen Lichtstrahls und der zugeordneten verschobenen Phaseninformationen des dem jeweiligen Lichtstrahl zugeordneten verschobenen Lichtstrahls.

Gemäß verschiedenen Ausführungsformen können die Phaseninformationen eines jeweiligen Lichtstrahls der Vielzahl von Lichtstrahlen einen Kosinuswert der zugeordneten Phase aufweisen. Die verschobenen Phaseninformationen eines jeweiligen verschobenen Lichtstrahls der Vielzahl von verschobenen Lichtstrahlen können einen Kosinuswert der zugeordneten verschobenen Phase aufweisen. Gemäß verschiedenen Ausführungsformen kann der Prozessor 108 eingerichtet sein zum Ermitteln der zugeordneten Phase 118 für jeden Lichtstrahl der Vielzahl von Lichtstrahlen unter Verwendung des jeweiligen Kosinuswerts der zugeordneten Phase des Lichtstrahls und des jeweiligen Kosinuswerts der zugeordneten verschobenen Phase des verschobenen Lichtstrahls. Der Prozessor 108 kann eingerichtet sein zum Ermitteln der zugeordneten Phase 118 für jeden Lichtstrahl der Vielzahl von Lichtstrahlen unter Verwendung einer Richtungsänderung zwischen dem Kosinuswert der zugeordneten Phase des jeweiligen Lichtstrahls und dem Kosinuswert der zugeordneten verschobenen Phase des jeweiligen verschobenen Lichtstrahls. Anschaulich kann die verschobene Phase des jeweiligen verschobenen Lichtstrahls in Bezug auf die jeweilige Phase gedreht (z.B. rotiert) sein und die Richtungsänderung kann eine Richtung der Drehung sein. Der Prozessor 108 kann eingerichtet sein, um die zugeordnete Phase 118 eines jeweiligen Lichtstrahls mittels der Arkuskosinus-Funktion zu ermitteln. Der Prozessor 108 kann eingerichtet sein, um die zugeordnete verschobene Phase eines jeweiligen verschobenen Lichtstrahls mittels der Arkuskosinus-Funktion zu ermitteln. Die Richtungsänderung zwischen dem Kosinuswert der zugeordneten Phase des jeweiligen Lichtstrahls und dem Kosinuswert der zugeordneten verschobenen Phase des jeweiligen verschobenen Lichtstrahls kann das Vorzeichen der Arkuskosinus-Funktion angeben. Anschaulich kann die Richtungsänderung eine positive Richtung oder eine negative Richtung aufweisen, wobei die positive Richtung ein positives Vorzeichen und die negative Richtung ein negatives Vorzeichen angeben kann.

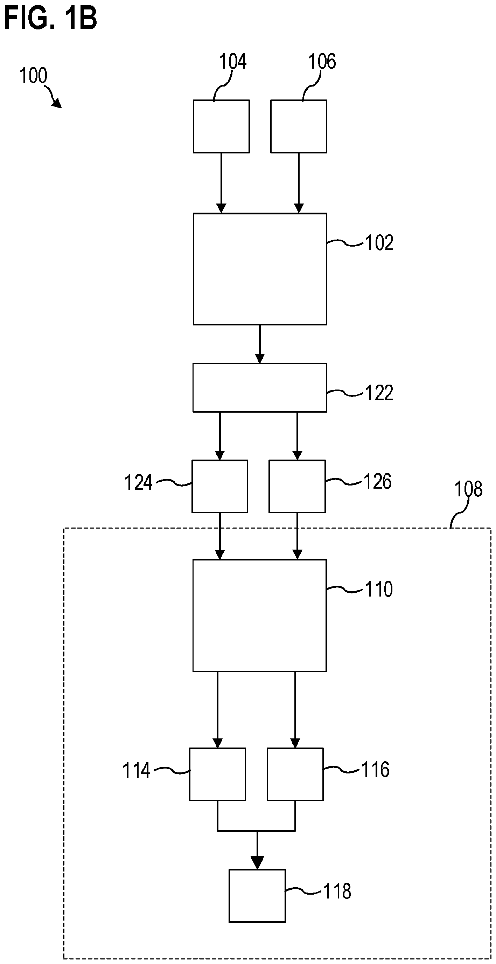

**FIG. 1B** zeigt eine Empfangsvorrichtung 100 gemäß verschiedenen Ausführungsformen, wobei die Empfangsvorrichtung 100 ferner eine Bildgebungsvorrichtung 122 aufweisen kann. Gemäß verschiedenen Ausführungsformen kann die Bildgebungsvorrichtung 122 ein oder mehrere Kameras aufweisen.

Die Bildgebungsvorrichtung 122 kann eingerichtet sein zum Bereitstellen von Lichtbilddaten 124 für den empfangenen vermischten Lichtstrahl 104. Die Lichtbilddaten 124 (in manchen Aspekten als Amplitudenbilder bezeichnet) können reellwertige Intensitätsverteilungen aufweisen. Die Intensitätsverteilungen können eine Verteilung der Intensität der Lichtstrahlen der überlagerten Vielzahl von Lichtstrahlen aufweisen. Anschaulich können die Intensitätsverteilungen die zugeordneten Amplituden der Lichtstrahlen der überlagerten Vielzahl von Lichtstrahlen charakterisieren. Gemäß verschiedenen Ausführungsformen kann das trainierte neuronale Netzwerk 110 eingerichtet sein, um die Modeninformationen 114 für die Lichtbilddaten 124 zu ermitteln.

Die Bildgebungsvorrichtung 122 kann eingerichtet sein zum Bereitstellen von verschobenen Lichtbilddaten 126 für den empfangenen vermischten verschobenen Lichtstrahl 106. Die verschobenen Lichtbilddaten 126 können reellwertige verschobene Intensitätsverteilungen aufweisen. Die verschobenen Intensitätsverteilungen können eine Verteilung der Intensität der verschobenen Lichtstrahlen der überlagerten Vielzahl von verschobenen Lichtstrahlen aufweisen. Anschaulich können die verschobenen Intensitätsverteilungen die zugeordneten Amplituden der Lichtstrahlen der überlagerten Vielzahl von verschobenen Lichtstrahlen charakterisieren. Gemäß verschiedenen Ausführungsformen kann das trainierte neuronale Netzwerk 110 eingerichtet sein, um die verschobenen Modeninformationen 116 für die verschobenen Lichtbilddaten 126 zu ermitteln.

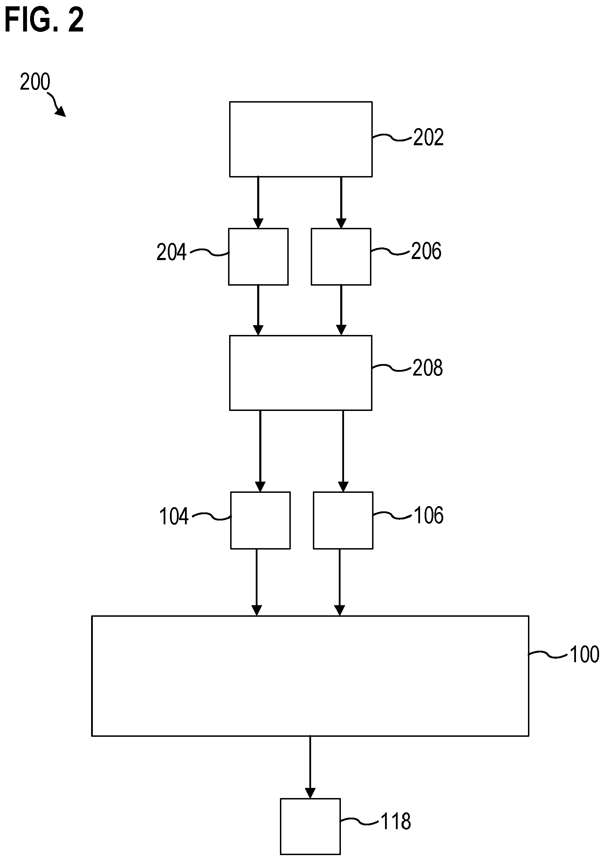

**FIG. 2** zeigt ein System 200 gemäß verschiedenen Ausführungsformen. Das System 200 kann die Empfangsvorrichtung 100 aufweisen. Das System 200 kann ferner einen optischen Multimode-Wellenleiter 208 aufweisen.

Das System 200 kann eine Sendevorrichtung 202 aufweisen. Die Sendevorrichtung 202 kann eingerichtet sein, um eine Vielzahl von Lichtstrahlen 204 an den optischen Multimode-Wellenleiter 208 bereitzustellen. Die Sendevorrichtung 202 kann eingerichtet sein, um eine Vielzahl von verschobenen Lichtstrahlen 206 an den optischen Multimode-Wellenleiter 208 bereitzustellen.

Der optische Multimode-Wellenleiter 208 kann eingerichtet sein, um die Vielzahl von Lichtstrahlen 204 zu übertragen. Der optische Multimode-Wellenleiter 208 kann eingerichtet sein, um den vermischten Lichtstrahl 104 für die Vielzahl von Lichtstrahlen 204 an die Empfangsvorrichtung 100 bereitzustellen. Der optische Multimode-Wellenleiter 208 kann eingerichtet sein, um die Vielzahl von verschobenen Lichtstrahlen 206 zu übertragen. Der optische Multimode-Wellenleiter 208 kann eingerichtet sein, um den vermischten verschobenen Lichtstrahl 106 für die Vielzahl von verschobenen Lichtstrahlen 206 an die Empfangsvorrichtung 100 bereitzustellen.

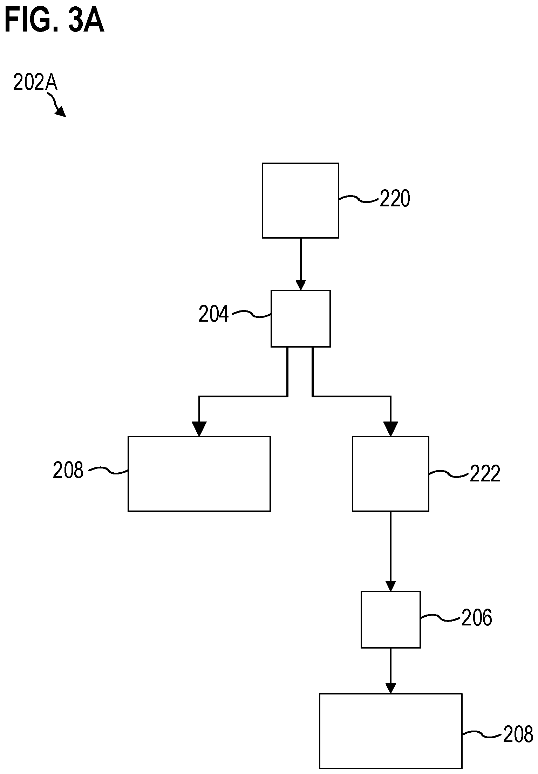

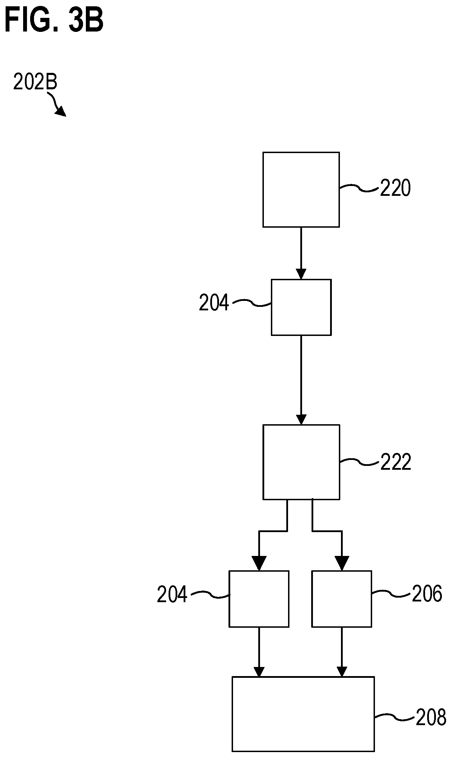

**FIG. 3A** zeigt eine Sendevorrichtung 202A gemäß verschiedenen Ausführungsformen und **FIG. 3B** zeigt eine Sendevorrichtung 202B gemäß verschiedenen Ausführungsformen. Die Sendevorrichtung 202 kann beispielsweise gemäß der Sendevorrichtung 202A oder der Sendevorrichtung 202B eingerichtet sein.

Die Sendevorrichtung 202 kann eine Erzeugungsvorrichtung 220 aufweisen. Die Erzeugungsvorrichtung 220 kann eingerichtet sein zum Bereitstellen der Vielzahl von Lichtstrahlen 204. Die Sendevorrichtung 202 kann eine Verschiebungsvorrichtung 222 aufweisen. Die Verschiebungsvorrichtung 222 kann eingerichtet sein, um für jeden Lichtstrahl der Vielzahl von Lichtstrahlen 204 den jeweiligen verschobenen Lichtstrahl der Vielzahl von verschobenen Lichtstrahlen 206 bereitzustellen. Anschaulich kann die Verschiebungsvorrichtung 222 einen Lichtstrahl phasenverschieben (z.B. um ungefähr 1 MHz, z.B. um mehr als 1 MHz). Die Verschiebungsvorrichtung 222 kann beispielsweise einen akustooptischen Modulator aufweisen. Gemäß verschiedenen Ausführungsformen kann die Verschiebungsvorrichtung 222 eingerichtet sein, um einen Lichtstrahl derart zu verschieben, dass die Wellenlänge des Lichtstrahls im Wesentlichen unverändert bleibt.

Die Erzeugungsvorrichtung 220 kann eingerichtet sein, um die Vielzahl von Lichtstrahlen 204 direkt (siehe zum Beispiel FIG. 3A) oder indirekt (siehe zum Beispiel FIG. 3B) an den optischen Multimode-Wellenleiter 208 bereitzustellen. Beispielsweise kann die Erzeugungsvorrichtung 220 die Vielzahl von Lichtstrahlen 204 direkt an den optischen Multimode-Wellenleiter 208 bereitstellen oder die Erzeugungsvorrichtung 220 kann die Vielzahl von Lichtstrahlen 204 indirekt an den optischen Multimode-Wellenleiter 208 mittels der Verschiebungsvorrichtung 222 bereitstellen (siehe zum Beispiel FIG. 3B). Zum Beispiel kann die Erzeugungsvorrichtung 220 die Vielzahl von Lichtstrahlen 204 an die Verschiebungsvorrichtung 222 bereitstellen und die Verschiebungsvorrichtung 222 kann die Vielzahl von Lichtstrahlen 204 (z.B. ohne phasenverschieben der Lichtstrahlen der Vielzahl von Lichtstrahlen 204) an den optischen Multimode-Wellenleiter 208 bereitstellen.

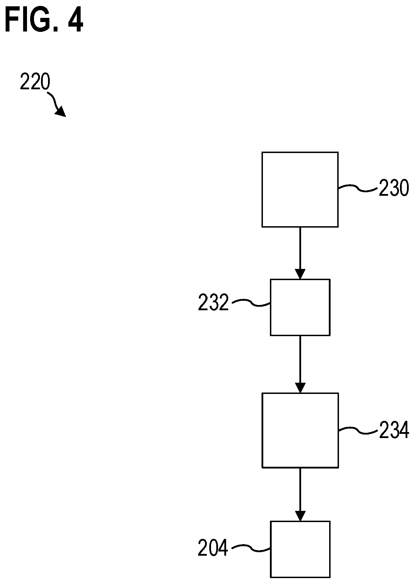

**FIG. 4** zeigt eine Erzeugungsvorrichtung 220 gemäß verschiedenen Ausführungsformen.

Die Erzeugungsvorrichtung 220 kann eine Initial-Lichtstrahl-Erzeugungsvorrichtung 230 aufweisen. Die Initial-Lichtstrahl-Erzeugungsvorrichtung 230 kann eingerichtet sein zum Erzeugen eines Initial-Lichtstrahls 232.

Die Erzeugungsvorrichtung 220 kann eine Modulationsvorrichtung 234 aufweisen. Die Modulationsvorrichtung 234 kann eingerichtet sein zum Erzeugen der Vielzahl von Lichtstrahlen 204 für den Initial-Lichtstrahl 232.

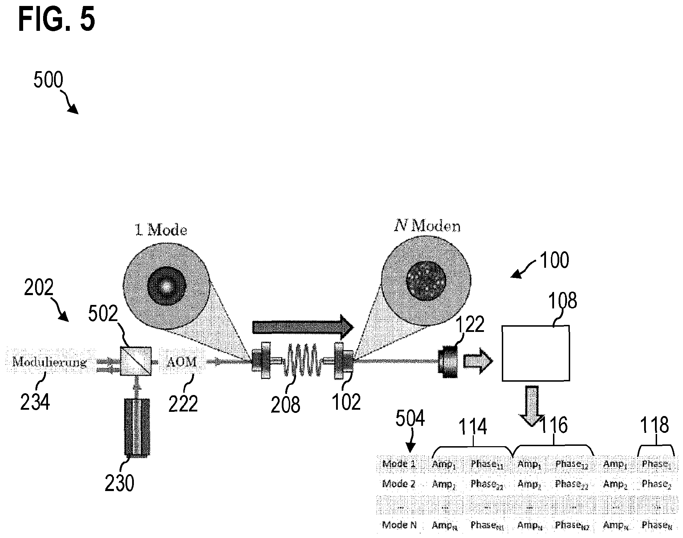

**FIG. 5** zeigt ein System 500 gemäß verschiedenen Ausführungsformen. Das System 500 kann die Sendevorrichtung 202 aufweisen. Die Initial-Lichtstrahl-Erzeugungsvorrichtung 230 kann den Initial-Lichtstrahl 232 erzeugen. Die Sendevorrichtung 202 kann beispielsweise einen Strahlteiler 502 aufweisen. Der Strahlteiler 502 kann zum Beispiel ein 50:50-Strahlteiler sein. Der Strahlteiler 502 kann eingerichtet sein, um zumindest einen Teil des Initial-Lichtstrahls 232 an die Verschiebungsvorrichtung 222 bereitzustellen. Der Strahlteiler 502 kann eingerichtet sein, um zumindest einen Teil des Initial-Lichtstrahls 232 an die Modulationsvorrichtung 234 bereitzustellen. Jeder Lichtstrahl der Vielzahl von Lichtstrahlen 204 kann die zugeordnete Mode der Vielzahl von Moden 504 aufweisen. Die Vielzahl von Moden 504 kann zum Beispiel eine Anzahl, N, von Moden aufweisen, wobei N jede beliebige natürliche Ganzzahl sein kann. Wie oben beschrieben, kann die Vielzahl von Lichtstrahlen die Grundmode aufweisen, wobei die Phase der Grundmode gleich "0" sein kann. Die Phaseninformationen eines Lichtstrahls der Vielzahl von Lichtstrahlen 204 können relative Phaseninformationen in Bezug auf die Grundmode sein. In dem Fall, in dem die Grundmode gleich "0" ist, kann das neuronale Netzwerk 110 eingerichtet sein, um eine Anzahl, N-1, von Phaseninformationen zu ermitteln und/oder um eine Anzahl, N, von Amplituden zu ermitteln.

Das System 500 kann ferner den optischen Multimode-Wellenleiter 208 aufweisen zum Übertragen der Vielzahl von Lichtstrahlen 204 und zum Bereitstellen des vermischten Lichtstrahls 104 an die Empfangsvorrichtung 100. Der optische Multimode-Wellenleiter 208 kann ferner die Vielzahl von verschobenen Lichtstrahlen 206 übertragen und den vermischten verschobenen Lichtstrahl 106 an die Empfangsvorrichtung 100 bereitstellen.

Die Empfangsvorrichtung 100 kann eingerichtet sein, um für jeden Lichtstrahl der Vielzahl von Lichtstrahlen 204 die Modeninformationen 114 zu ermitteln. Die Modeninformationen 114 können für jeden Lichtstrahl der Vielzahl von Lichtstrahlen 204 die zugeordnete Amplitude ("Amp_{N}") und die zugeordneten Phaseninformationen ("Phase_{N1}") aufweisen.

Die Empfangsvorrichtung 100 kann eingerichtet sein, um für jeden verschobenen Lichtstrahl der Vielzahl von verschobenen Lichtstrahlen 206 die verschobenen Modeninformationen 116 zu ermitteln. Die verschobenen Modeninformationen 116 können für jeden verschobenen Lichtstrahl der Vielzahl von verschobenen Lichtstrahlen 206 die zugeordnete Amplitude ("Amp_{N}") und die zugeordneten verschobenen Phaseninformationen ("Phase_{N2}") aufweisen.

Die Empfangsvorrichtung 100 kann eingerichtet sein, um für jeden Lichtstrahl der Vielzahl von Lichtstrahlen 204 die jeweils zugeordnete Phase ("Phase_{N}") zu ermitteln. Anschaulich kann die Empfangsvorrichtung 100 mittels Ermittelns der zugeordneten Amplitude ("Amp_{N}") und der zugeordneten Phase ("Phase_{N}") eines jeweiligen Lichtstrahls der Vielzahl von Lichtstrahlen 204 die Transmissionsmatrix (in manchen Aspekten als "komplexwertige Transmissionsmatrix" bezeichnet) des optischen Multimode-Wellenleiters 208 ermitteln. Das Ermitteln der Transmissionsmatrix kann eine intensitätsbasierte Modendekomposition aufweisen oder sein. Das Ermitteln der Transmissionsmatrix kann ein Kalibrieren des optischen Multimode-Wellenleiters 208 sein.

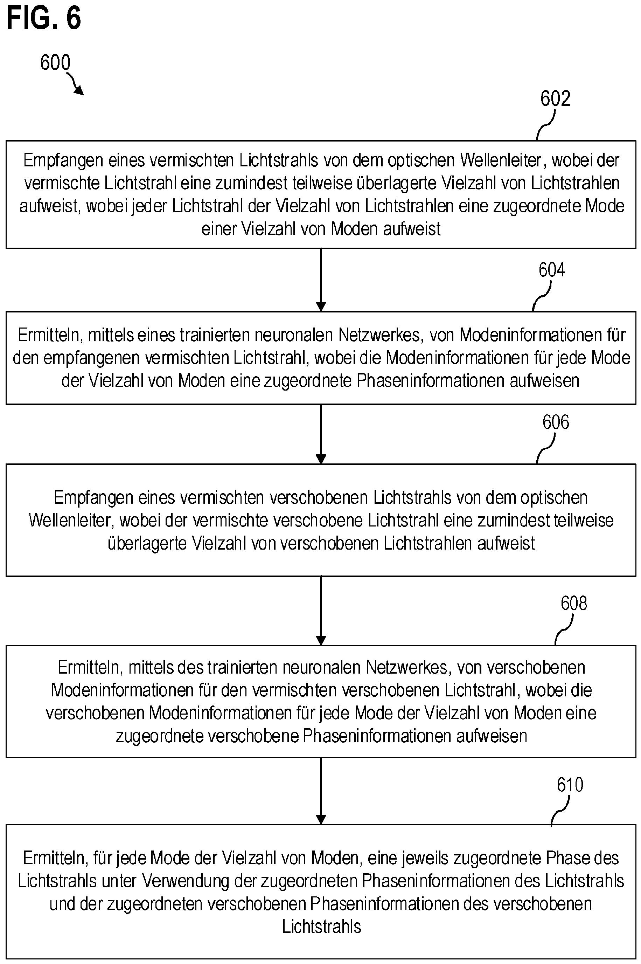

**FIG. 6** zeigt ein Verfahren 600 zum Ermitteln von Übertragungseigenschaften eines optischen Wellenleiters gemäß verschiedenen Ausführungsformen.

Das Verfahren 600 kann das Bereitstellen eines mittels des optischen Wellenleiters (z.B. einem optischen Multimode-Wellenleiter) übertragenen vermischten Lichtstrahls aufweisen. Das Verfahren 600 kann ein Empfangen des vermischten Lichtstrahls von dem optischen Wellenleiter aufweisen (in 602). Der vermischte Lichtstrahl kann eine zumindest teilweise überlagerte Vielzahl von Lichtstrahlen aufweisen. Jeder Lichtstrahl der Vielzahl von Lichtstrahlen kann eine zugeordnete Mode einer Vielzahl von Moden mit einer zugeordneten Amplitude und einer zugeordneten Phase aufweisen.

Das Verfahren 600 kann ein Ermitteln von Modeninformationen für den empfangenen vermischten Lichtstrahl unter Verwendung eines trainierten neuronalen Netzwerks aufweisen (in 604).

Die Modeninformationen können für jede Mode der Vielzahl von Moden die zugeordnete Amplitude und zugeordnete Phaseninformationen aufweisen.

Das Verfahren 600 kann das Bereitstellen eines mittels des optischen Wellenleiters übertragenen vermischten verschobenen Lichtstrahls aufweisen. Das Verfahren 600 kann ein Empfangen des vermischten verschobenen Lichtstrahls von dem optischen Wellenleiter aufweisen (in 606). Der vermischte verschobene Lichtstrahl kann eine zumindest teilweise überlagerte Vielzahl von verschobenen Lichtstrahlen aufweisen. Jeder verschobene Lichtstrahl der Vielzahl von verschobenen Lichtstrahlen einem Lichtstrahl der Vielzahl von Lichtstrahlen zugeordnet sein. Jeder verschobene Lichtstrahl der Vielzahl von verschobenen Lichtstrahlen kann die zugeordnete Mode der Vielzahl von Moden mit der zugeordneten Amplitude und einer zugeordneten verschobenen Phase aufweisen.

Das Verfahren 600 kann ein Ermitteln von verschobenen Modeninformationen für den empfangenen vermischten verschobenen Lichtstrahl unter Verwendung des trainierten neuronalen Netzwerks aufweisen (in 608). Die verschobenen Modeninformationen können für jede Mode der Vielzahl von Moden die zugeordnete Amplitude und zugeordnete verschobene Phaseninformationen aufweisen.

Das Verfahren 600 kann ferner für jede Mode der Vielzahl von Moden ein Ermitteln der jeweils zugeordneten Phase des Lichtstrahls unter Verwendung der zugeordneten Phaseninformationen des Lichtstrahls und der zugeordneten verschobenen Phaseninformationen des verschobenen Lichtstrahls aufweisen (in 610).

Gemäß verschiedenen Ausführungsformen kann das Verfahren 600 zum Ermitteln von Übertragungseigenschaften des optischen Wellenleiters ein Verfahren zum Kalibrieren des optischen Wellenleiters sein.

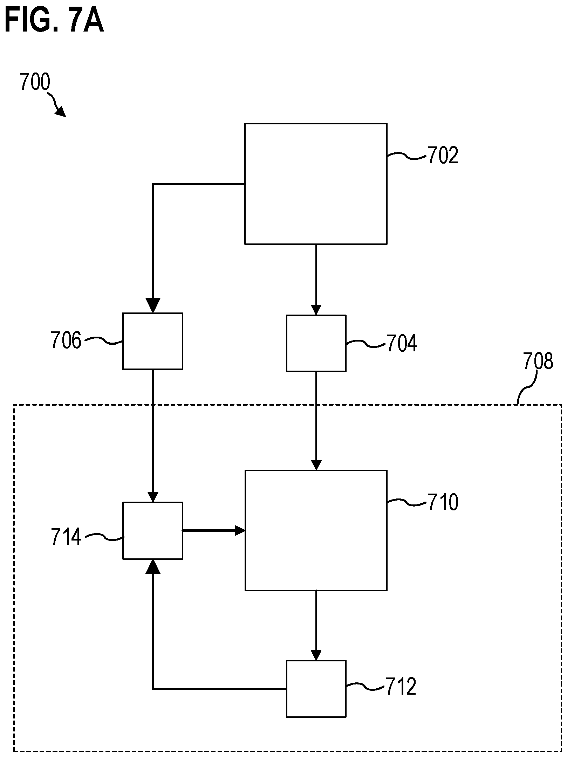

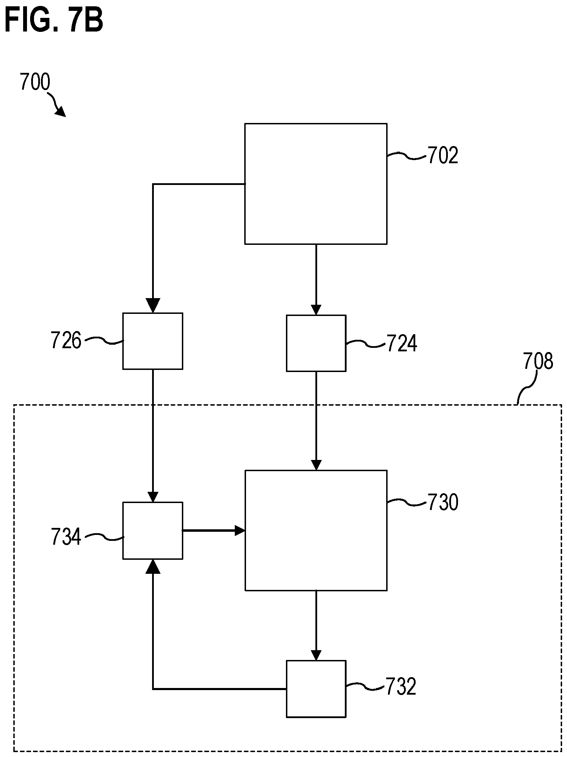

**FIG. 7A** und **FIG. 7B** zeigen eine Trainingsvorrichtung 700 gemäß verschiedenen Ausführungsformen. Die Trainingsvorrichtung 700 kann eingerichtet sein, um ein neuronales Netzwerk zu trainieren. Anschaulich kann die Trainingsvorrichtung 700 ein neuronales Netzwerk trainieren, um ein trainiertes neuronales Netzwerk, wie beispielsweise das trainierte neuronale Netzwerk 110 bereitzustellen.

Die Trainingsvorrichtung 700 kann eine Speichervorrichtung 702 aufweisen. Die Speichervorrichtung 702 kann zumindest einen Speicher aufweisen. Der Speicher kann beispielsweise bei der durch einen Prozessor durchgeführten Verarbeitung verwendet werden. Ein in den Ausführungsformen verwendeter Speicher kann ein flüchtiger Speicher, zum Beispiel ein DRAM (dynamischer Direktzugriffsspeicher), oder ein nichtflüchtiger Speicher, zum Beispiel ein PROM (programmierbarer Festwertspeicher), ein EPROM (löschbarer PROM), ein EEPROM (elektrisch löschbarer PROM) oder ein Flash-Speicher, wie beispielsweise eine Speichereinrichtung mit schwebendem Gate, eine ladungsabfangende Speichereinrichtung, ein MRAM (magnetoresistiver Direktzugriffsspeicher) oder ein PCRAM (Phasenwechsel-Direktzugriffsspeicher), sein. Die Speichervorrichtung 702 kann eingerichtet sein, um Daten, wie beispielsweise ein oder mehrere Amplitudenbilder und/oder ein oder mehreren Amplitudenbildern zugeordnete Informationen, zu speichern. Die Speichervorrichtung 702 kann eingerichtet sein, um einen Code (z.B. einen Programmcode) zu speichern, beispielsweise um ein neuronales Netzwerk zu implementieren.

Mit Bezug auf **FIG. 7A** kann die Speichervorrichtung 702 eine Vielzahl von ersten Amplitudenbildern 704 speichern. Jedes erste Amplitudenbild der Vielzahl von ersten Amplitudenbildern 704 kann eine reellwertige Intensitätsverteilung aufweisen. Die Intensitätsverteilung kann eine Verteilung der Intensität von überlagerten Lichtstrahlen aufweisen. Beispielsweise können sich bei der Übertragung von mehreren Lichtstrahlen mit voneinander verschiedenen Amplituden mittels eines optischen Wellenleiters die mehreren Lichtstrahlen überlagern und so eine Intensitätsverteilung bereitstellen. Gemäß verschiedenen Ausführungsformen können die ersten Amplitudenbilder der Vielzahl von ersten Amplitudenbildern 704 gemessen werden und/oder können generiert werden (zum Beispiel mittels eines Computerprogramms, zum Beispiel mittels eines anderen neuronalen Netzwerks).

Jedem ersten Amplitudenbild der Vielzahl von ersten Amplitudenbildern 704 kann eine erste Vielzahl von Moden zugeordnet sein. Die erste Vielzahl von Moden kann zum Beispiel eine erste Anzahl, M, von Moden aufweisen, wobei M jede beliebige natürliche Ganzzahl sein kann. Für jedes erste Amplitudenbild der Vielzahl von ersten Amplitudenbildern 704 kann einer jeden Mode der ersten Vielzahl von Moden eine Amplitude zugeordnet sein. Für jedes erste Amplitudenbild der Vielzahl von ersten Amplitudenbildern 704 kann einer jeden Mode der ersten Vielzahl von Moden eine Phase zugeordnet sein. Gemäß verschiedenen Ausführungsformen kann die Speichervorrichtung 702 für jedes erste Amplitudenbild der Vielzahl von ersten Amplitudenbildern 704 Informationen 706 bezüglich der jeweiligen Amplitude und/oder der jeweiligen Phase einer Mode der ersten Vielzahl von Moden speichern.

Die Trainingsvorrichtung 700 kann ferner ein oder mehrere Prozessoren 708 aufweisen. Die ein oder mehreren Prozessoren 708 (in manchen Aspekten als Prozessor 708 bezeichnet) können, wie oben beschrieben, jede Art von Schaltung, d.h. jede Art von Logik-implementierender Entität, sein. In verschiedenen Ausführungsformen können die ein oder mehreren Prozessoren 708 entsprechend den ein oder mehreren Prozessoren 108 der Empfangsvorrichtung 100 eingerichtet sein.

Der Prozessor 708 kann eingerichtet sein, um ein neuronales Netzwerk 710 zu implementieren. Das neuronale Netzwerk 710 kann eingerichtet sein, um Modeninformationen 712 für jedes erste Amplitudenbild der Vielzahl von ersten Amplitudenbildern 704 zu ermitteln. Die Modeninformationen 712 eines jeweiligen ersten Amplitudenbilds können für jede Mode der ersten Vielzahl von Moden eine ermittelte zugeordnete Amplitude aufweisen. Die Modeninformationen 712 eines jeweiligen ersten Amplitudenbilds können für jede Mode der ersten Vielzahl von Moden ermittelte zugeordnete Phaseninformationen aufweisen. Die ermittelten zugeordneten Phaseninformationen einer jeweiligen Mode können beispielsweise einen Kosinuswert der der Mode zugeordneten Phase aufweisen.

Der Prozessor 708 kann eingerichtet sein, um, für jedes erste Amplitudenbild der Vielzahl von ersten Amplitudenbildern 704, die für eine jede Mode der ersten Vielzahl von Moden die ermittelten Phaseninformationen mit der jeweiligen zugeordneten Phase (z.B. unter Verwendung der Informationen 706) zu vergleichen. Beispielsweise kann der Prozessor 708 eingerichtet sein, um den mittels des neuronalen Netzwerks 710 ermittelten Kosinuswert der Phase einer jeweiligen Mode mit der zugeordneten Phase zu vergleichen. Gemäß verschiedenen Ausführungsformen kann der Prozessor 708 einen Fehler der ermittelten Phaseninformationen berechnen (zum Beispiel mittels einer Verlustfunktion).

Der Prozessor 708 kann eingerichtet sein, um das neuronale Netzwerk 710 basierend auf dem Vergleichen zu trainieren (zum Beispiel basierend auf der Verlustfunktion). Zum Beispiel kann der Prozessor 708 das neuronale Netzwerk 710 derart trainieren, dass der ermittelte Fehler verringert (zum Beispiel minimiert) wird.

Gemäß verschiedenen Ausführungsformen kann das Trainieren des neuronalen Netzwerkes 710 unter Verwendung der Vielzahl von ersten Amplitudenbildern 704 ein Vortrainieren des neuronalen Netzwerks 710 sein. Beispielsweise kann das unter Verwendung der Vielzahl von ersten Amplitudenbildern 704 trainierte neuronale Netzwerk 710 ein vortrainiertes neuronales Netzwerk sein.

Mit Bezug auf **FIG. 7B** kann das unter Verwendung der Vielzahl von ersten Amplitudenbildern 704 trainierte neuronale Netzwerk 710 ein vortrainiertes neuronales Netzwerk 730 sein.

Die Speichervorrichtung 702 kann ferner eine Vielzahl von zweiten Amplitudenbildern 724 speichern. Jedes zweite Amplitudenbild der Vielzahl von zweiten Amplitudenbildern 724 kann eine reellwertige Intensitätsverteilung aufweisen. Gemäß verschiedenen Ausführungsformen können die zweiten Amplitudenbilder der Vielzahl von zweiten Amplitudenbildern 724 gemessen werden und/oder können generiert werden.

Jedem zweiten Amplitudenbild der Vielzahl von zweiten Amplitudenbildern 724 kann eine zweite Vielzahl von Moden zugeordnet sein. Die zweite Vielzahl von Moden kann zum Beispiel eine zweite Anzahl, N, von Moden aufweisen, wobei N jede beliebige natürliche Ganzzahl sein kann. Die zweite Anzahl, N, von Moden kann größer sein als die erste Anzahl, M, von Moden. Gemäß verschiedenen Ausführungsformen kann die zweite Vielzahl von Moden die erste Vielzahl von Mode und mindestens eine zusätzliche Mode aufweisen. Beispielsweise kann die erste Anzahl, M, von Moden drei Moden aufweisen und die zweite Anzahl, N, von Moden kann fünf Moden aufweisen. Beispielsweise kann die erste Anzahl, M, von Moden fünf Moden aufweisen und die zweite Anzahl, N, von Moden kann zehn Moden aufweisen. Beispielsweise kann die erste Anzahl, M, von Moden zwanzig Moden aufweisen und die zweite Anzahl, N, von Moden kann fünfzig Moden aufweisen. Beispielsweise kann die erste Anzahl, M, von Moden fünfzig Moden aufweisen und die zweite Anzahl, N, von Moden kann mehr als hundert Moden aufweisen. Gemäß verschiedenen Ausführungsformen kann die zweite Anzahl, N, von Moden ein Vielfaches der ersten Anzahl, M, von Moden sein. Zum Beispiel kann die zweite Anzahl, N, von Moden doppelt so viele Moden wie die erste Anzahl, M, von Moden aufweisen. Zum Beispiel kann die zweite Anzahl, N, von Moden dreimal so viele Moden wie die erste Anzahl, M, von Moden aufweisen. Zum Beispiel kann die zweite Anzahl, N, von Moden viermal so viele Moden wie die erste Anzahl, M, von Moden aufweisen.

Für jedes zweite Amplitudenbild der Vielzahl von zweiten Amplitudenbildern 724 kann einer jeden Mode der zweiten Vielzahl von Moden eine Amplitude zugeordnet sein. Für jedes zweite Amplitudenbild der Vielzahl von zweiten Amplitudenbildern 724 kann einer jeden Mode der zweiten Vielzahl von Moden eine Phase zugeordnet sein. Gemäß verschiedenen Ausführungsformen kann die Speichervorrichtung 702 für jedes zweite Amplitudenbild der Vielzahl von zweiten Amplitudenbildern 724 Informationen 726 bezüglich der jeweiligen Amplitude und/oder der jeweiligen Phase einer Mode der zweiten Vielzahl von Moden speichern.

Der Prozessor 708 kann eingerichtet sein, um ein vortrainiertes neuronales Netzwerk 730 zu implementieren, wie beispielsweise das unter Verwendung der Vielzahl von ersten Amplitudenbildern trainierte neuronale Netzwerk 710. Das vortrainierte neuronale Netzwerk 730 kann eingerichtet sein, um Modeninformationen 732 für jedes zweite Amplitudenbild der Vielzahl von zweiten Amplitudenbildern 724 zu ermitteln. Die Modeninformationen 732 eines jeweiligen zweiten Amplitudenbilds können für jede Mode der zweiten Vielzahl von Moden eine ermittelte zugeordnete Amplitude aufweisen. Die Modeninformationen 732 eines jeweiligen zweiten Amplitudenbilds können für jede Mode der zweiten Vielzahl von Moden ermittelte zugeordnete Phaseninformationen aufweisen.

Die ermittelten zugeordneten Phaseninformationen einer jeweiligen Mode können beispielsweise einen Kosinuswert der der Mode zugeordneten Phase aufweisen.

Der Prozessor 708 kann eingerichtet sein, um, für jedes zweite Amplitudenbild der Vielzahl von zweiten Amplitudenbildern 724, die für eine jede Mode der zweiten Vielzahl von Moden die ermittelten Phaseninformationen mit der jeweiligen zugeordneten Phase (z.B. unter Verwendung der Informationen 726) zu vergleichen. Beispielsweise kann der Prozessor 708 eingerichtet sein, um den mittels des vortrainierten neuronalen Netzwerks 730 ermittelten Kosinuswert der Phase einer jeweiligen Mode mit der zugeordneten Phase zu vergleichen. Gemäß verschiedenen Ausführungsformen kann der Prozessor 708 einen Fehler der ermittelten Phaseninformationen berechnen (zum Beispiel mittels einer Verlustfunktion).

Der Prozessor 708 kann eingerichtet sein, um das vortrainierte neuronale Netzwerk 730 basierend auf dem Vergleichen zu trainieren (zum Beispiel basierend auf der Verlustfunktion). Zum Beispiel kann der Prozessor 708 das vortrainierte neuronale Netzwerk 730 derart trainieren, dass der ermittelte Fehler verringert (zum Beispiel minimiert) wird.

Gemäß verschiedenen Ausführungsformen kann das Vortrainieren des neuronalen Netzwerks 710 (z.B. zum Erzeugen des vortrainierten neuronalen Netzwerks 730) für eine Anzahl von N=5 Moden der ersten Vielzahl von Moden erfolgen. Die Vielzahl von ersten Amplitudenbildern kann beispielsweise 200.000 Amplitudenbilder aufweisen. Gemäß verschiedenen Ausführungsformen kann wurde das neuronale Netzwerk 710 unter Verwendung von 199.000 Amplitudenbildern der Vielzahl von ersten Amplitudenbildern vortrainiert und eine Zuverlässigkeit (z.B. ein Fehlerwert, z.B. eine Genauigkeit, etc.) des vortrainierten neuronalen Netzwerks 730 wurde mittels 1.000 Amplitudenbildern der Vielzahl von ersten Amplitudenbildern ermittelt.

Gemäß verschiedenen Ausführungsformen kann das Trainieren des vortrainierten neuronalen Netzwerks 730 für eine Anzahl von N=10 Moden der zweiten Vielzahl von Moden erfolgen. Die Vielzahl von zweiten Amplitudenbildern kann beispielsweise 300.000 Amplitudenbilder aufweisen. Die Amplitudenbilder der Vielzahl von zweiten Amplitudenbildern können von den Amplitudenbildern der Vielzahl von ersten Amplitudenbildern verschieden sein. Gemäß verschiedenen Ausführungsformen kann wurde das vortrainierte neuronale Netzwerk 730 unter Verwendung von 299.000 Amplitudenbildern der Vielzahl von zweiten Amplitudenbildern trainiert und eine Zuverlässigkeit des trainierten neuronalen Netzwerks 730 wurde mittels 1.000 Amplitudenbildern der Vielzahl von zweiten Amplitudenbildern ermittelt.

Gemäß verschiedenen Ausführungsformen kann das Vortrainieren und/oder das Trainieren mittels mehrerer Iterationen (z.B. mehr als drei Iterationen, zum Beispiel mehr als zehn Iterationen, z.B. mehr als fünfzig Iterationen, etc.) der jeweiligen oben beschriebenen Verarbeitung erfolgen.

Gemäß verschiedenen Ausführungsformen kann das trainierte neuronale Netzwerk 730 ein vortrainiertes Netzwerk sein. Anschaulich kann das trainierte neuronale Netzwerk 730 weiter trainiert werden.

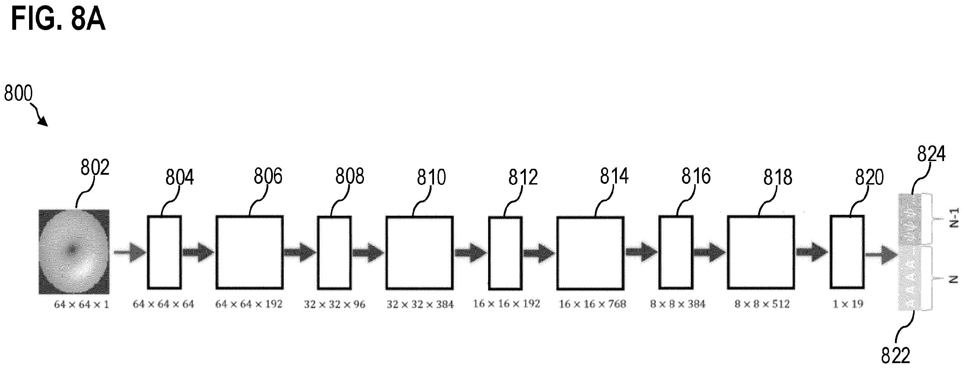

**FIG. 8A** zeigt eine Architektur eines neuronales Netzwerk 800 gemäß verschiedenen Ausführungsformen. Die Architektur des neuronalen Netzwerks 800 kann eine beispielhafte Architektur eines neuronalen Netzwerks für die hierin beschriebenen neuronalen Netzwerke (Z.B., das neuronale Netzwerk 110, das neuronale Netzwerk 710 bzw. das neuronale Netzwerk 730) sein.

Das neuronale Netzwerk 800 kann eingerichtet sein, um ein Amplitudenbild 802 zu verarbeiten. Das Amplitudenbild kann eine Intensitätsverteilung aufweisen. Das Amplitudenbild kann ein Graustufenbild sein. Das Amplitudenbild 802 kann eine Dimension von 64x64x1 (z.B. 64x64 Bildpunkte) aufweisen. Das neuronale Netzwerk 800 kann beispielsweise eingerichtet sein, um Amplitudenbilder mit einer Anzahl von N=10 Moden zu verarbeiten und um Modeninformationen für die N=10 Moden zu ermitteln.

Gemäß verschiedenen Ausführungsformen kann das neuronale Netzwerk 800 eine DenseNet-Architektur aufweisen. Die DenseNet-Architektur wird beispielsweise in Huang et al., Densely Connected Convolutional Netwerks", Proceedings oft he IEEE conference on computer vision and pattern recoginition, 2017 beschrieben. Das neuronale Netzwerk 800 kann beispielsweise ein neuronales Faltungsnetzwerk sein.

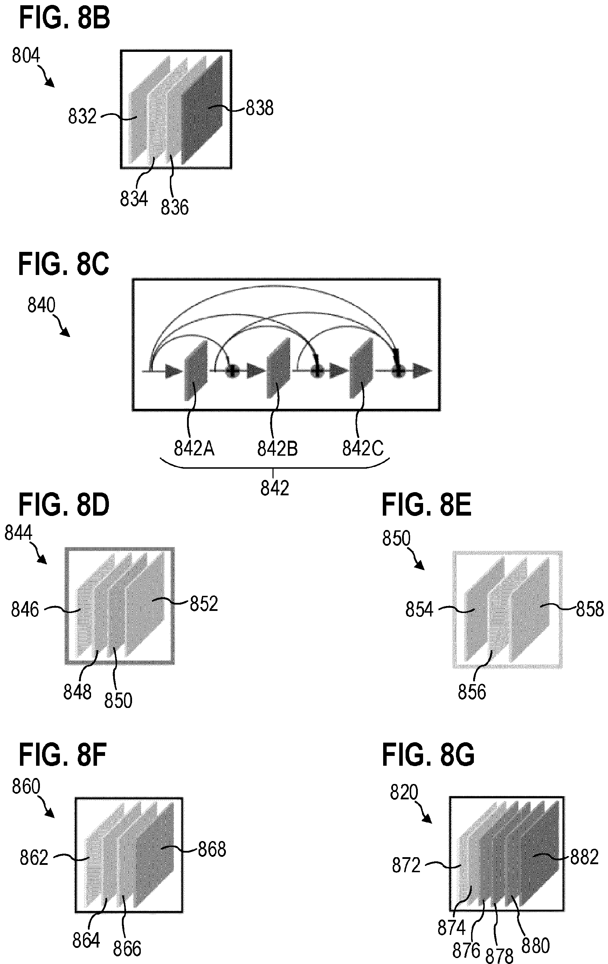

**FIGs. 8B bis 8G** zeigen jeweils beispielhafte Elemente (z.B. Strukturen einzelner Blöcke) des neuronalen Netzwerks 800 gemäß verschiedenen Ausführungsformen.

Auf eine ausführliche Beschreibung der Funktionsweise von bekannten Schichten bzw. Funktionen eines neuronalen Netzwerks, wie beispielsweise einer Faltungsschicht, einer Aktivierungsfunktions-Schicht, ein Normalisierungs-Schicht, einer Pooling-Schicht etc., wird verzichtet, um die Beschreibung nicht unnötig unklar zu machen.

Das neuronale Netzwerk 800 kann einen Merkmalsblock 804 aufweisen. Der Merkmalsblock 804 kann eingerichtet sein, um das Amplitudenbild 802 zu verarbeiten. Der Merkmalsblock 804 kann eingerichtet sein, um eine Merkmalskarte mit einer Dimension von 64x64x64 auszugeben (in manchen Aspekten als Merkmalskarte mit 64x64x64 Merkmalen bezeichnet). Eine Merkmalskarte kann ein Merkmalsvektor sein. Eine beispielhafte Ausführungsform des Merkmalsblocks 804 ist in **FIG. 8B** dargestellt. Der Merkmalsblock 804 kann eine Faltungsschicht 832 aufweisen. Die Faltungsschicht 832 kann eine ConV2d-Schicht sein. Der Merkmalsblock 804 kann eine Batch-Normalisierungs-Schicht 834 aufweisen. Die Batch-Normalisierungs-Schicht 834 kann auf die Faltungsschicht 832 folgen. Wenn eine Schicht als auf eine andere Schicht "folgend" bezeichnet wird, so kann die Schicht die von der anderen Schicht bereitgestellten Daten verarbeiten. Der Merkmalsblock 804 kann eine Aktivierungsfunktions-Schicht 836 aufweisen. Die Aktivierungsfunktions-Schicht 836 kann eine Aktivierungsfunktion aufweisen. Die Aktivierungsfunktion kann zum Beispiel eine Re-LU-Funktion sein (zum Beispiel kann die Aktivierungsfunktions-Schicht 836 eine Rectified Linear Unit sein). Die Aktivierungsfunktions-Schicht 836 kann auf die Batch-Normalisierungs-Schicht 834 folgen. Der Merkmalsblock 804 kann ferner eine Pooling-Schicht 838 aufweisen. Die Pooling-Schicht 838 kann auf die Aktivierungsfunktions-Schicht 836 folgen. Die Pooling-Schicht 838 kann eine Max-Pooling-Schicht sein.

Das neuronale Netzwerk 800 kann mehrere dichte Blöcke aufweisen. Ein Beispiel für einen dichten Block 840 ist in **FIG. 8C** dargestellt. Der dichte Block 840 kann eine Vielzahl von dichten Schichten 842 aufweisen. Jede dichte Schicht der Vielzahl von dichten Schichten 842 kann mit jeder nachfolgenden dichten Schicht der Vielzahl von dichten Schichten in einer vorwärts-gerichteten Art und Weise verbunden sein. Zum Beispiel kann eine dichte Schicht der Vielzahl von dichten Schichten die von der Schicht ausgebebenen Daten an jede nachfolgende dichte Schicht der Vielzahl von dichten Schichten 842 bereitstellen. Beispielsweise kann der dichte Block 840 eine Anzahl, L, von dichten Schichten aufweisen. Eine dichte Schicht der Vielzahl von dichten Schichten842 kann mit den nachfolgenden dichten Schichten verbunden sein und ein dichter Block 840 kann eine Anzahl von: L(L+1)/2 Verbindungen aufweisen. FIG. 8B zeigt beispielhaft einen dichten Block 840 mit drei dichten Schichten 842A, 842B, 843C. Die dichte Schicht 842A kann eingerichtet sein, um die von der Schicht ausgegebenen Daten an die dichte Schicht 842B und an die dichte Schicht 842C bereitzustellen. Die dichte Schicht 842B kann eingerichtet sein, um die von der Schicht ausgegebenen Daten an die dichte Schicht 842C bereitzustellen. Ein Beispiel für eine dichte Schicht 844 ist in **FIG. 8D** dargestellt. Gemäß verschiedenen Ausführungsformen kann die dichte Schicht 842A, die dichte Schicht 842B, und/oder die dichte Schicht 842C entsprechend der dichten Schicht 844 konfiguriert sein. Gemäß verschiedenen Ausführungsformen kann jede dichte Schicht der Vielzahl von dichten Schichten 842 entsprechend der dichten Schicht 844 konfiguriert sein. Die dichte Schicht 844 kann eine Batch-Normalisierungs-Schicht 846 aufweisen. Die dichte Schicht 844 kann eine Aktivierungsfunktions-Schicht 848 aufweisen. Die Aktivierungsfunktions-Schicht 848 kann eine ReLU-Aktivierungsfunktion aufweisen. Die Aktivierungsfunktions-Schicht 848 kann auf die Batch-Normalisierungs-Schicht 846 folgen. Die dichte Schicht 844 kann ferner eine Bottleneck-Schicht 850 aufweisen. Die Bottleneck-Schicht 850 kann auf die Aktivierungsfunktions-Schicht 848 folgen. Die Bottleneck-Schicht 850 kann eingerichtet sein, um die Dimension der verarbeiten (zum Beispiel von der Aktivierungsfunktions-Schicht 848 ausgegebenen) Daten zu verringern. Eine beispielhafte Bottleneck-Schicht 850 ist in **FIG. 8E** dargestellt. Gemäß verschiedenen Ausführungsformen kann die Bottleneck-Schicht 850 eine Faltungsschicht 854 aufweisen. Die Bottleneck-Schicht 850 kann ferner eine Batch-Normalisierungs-Schicht 856 aufweisen. Die Batch-Normalisierungs-Schicht 856 kann auf die Faltungsschicht 854 folgen. Die Bottleneck-Schicht 850 kann eine Aktivierungsfunktions-Schicht 858 aufweisen. Die Aktivierungsfunktions-Schicht 858 kann eine ReLU-Aktivierungsfunktion aufweisen. Die dichte Schicht 844 kann ferner eine Faltungsschicht 852 aufweisen. Die Faltungsschicht 852 kann auf die Bottleneck-Schicht 850 folgen.

Gemäß verschiedenen Ausführungsformen kann das neuronale Netzwerk 800 mehrere Übergangsblöcke aufweisen. Ein Übergangsblock kann eingerichtet sein, um die von einem dichten Block der mehreren dichten Blöcke ausgegebenen Daten zu verarbeiten und um von dem Übergangsblock ausgegebene Daten an einen nachfolgenden dichten Block bereitzustellen. Anschaulich kann ein Übergangsblock zwischen zwei dichten Blöcken angeordnet sein. Ein Beispiel für einen Übergangsblock 860 ist in **FIG. 8F** dargestellt. Der Übergangsblock 860 kann eine Batch-Normalisierungs-Schicht 862 aufweisen. Der Übergangsblock 860 kann ferner eine Aktivierungsfunktions-Schicht 864 aufweisen. Die Aktivierungsfunktions-Schicht 864 kann auf die Batch-Normalisierungs-Schicht 862 folgen. Die Aktivierungsfunktions-Schicht 864 kann eine ReLU-Aktivierungsfunktion aufweisen. Der Übergangsblock 860 kann eine Faltungsschicht 866 aufweisen. Die Faltungsschicht 866 kann auf die Aktivierungsfunktions-Schicht 864 folgen. Der Übergangsblock 860 kann eine Pooling-Schicht 868 aufweisen. Die Pooling-Schicht 868 kann eine Durchschnitts-Pooling-Schicht sein.

Mit Bezug auf FIG. 8A kann das neuronale Netzwerk 800 einen ersten dichten Block 806 aufweisen. Der erste dichte Block 806 kann entsprechend dem dichten Block 840 eingerichtet sein. Gemäß verschiedenen Ausführungsformen kann der erste dichte Block 806 sechs dichte Schichten 842 aufweisen. Der erste dichte Block 806 kann eingerichtet sein, um die von dem Merkmalsblock 804 ausgegebene Merkmalskarte mit 64x64x64 Merkmalen zu verarbeiten und um eine Merkmalskarte mit 64x64x192 Merkmalen auszugeben.

Das neuronale Netzwerk 800 einen ersten Übergangsblock 808 aufweisen. Der erste Übergangsblock 808 kann entsprechend dem Übergangsblock 860 eingerichtet sein. Gemäß verschiedenen Ausführungsformen kann der erste Übergangsblock 808 eingerichtet sein, um die von dem ersten dichten Block 806 ausgegebene Merkmalskarte mit 64x64x192 Merkmalen zu verarbeiten und um eine Merkmalskarte mit 32x32x96 Merkmalen auszugeben.

Das neuronale Netzwerk 800 einen zweiten dichten Block 810 aufweisen. Der zweite dichte Block 810 kann entsprechend dem dichten Block 840 eingerichtet sein. Gemäß verschiedenen Ausführungsformen kann der zweite dichte Block 810 zwölf dichte Schichten 842 aufweisen. Der zweite dichte Block 810 kann eingerichtet sein, um die von dem ersten Übergangsblock 808 ausgegebene Merkmalskarte mit 32x32x96 Merkmalen zu verarbeiten und um eine Merkmalskarte mit 32x32x384 Merkmalen auszugeben.

Das neuronale Netzwerk 800 einen zweiten Übergangsblock 812 aufweisen. Der zweite Übergangsblock 812 kann entsprechend dem Übergangsblock 860 eingerichtet sein. Gemäß verschiedenen Ausführungsformen kann der zweite Übergangsblock 812 eingerichtet sein, um die von dem zweiten dichten Block 810 ausgegebene Merkmalskarte mit 32x32x384 Merkmalen zu verarbeiten und um eine Merkmalskarte mit 16x16x192 Merkmalen auszugeben.

Das neuronale Netzwerk 800 einen dritten dichten Block 814 aufweisen. Der dritte dichte Block 814 kann entsprechend dem dichten Block 840 eingerichtet sein. Gemäß verschiedenen Ausführungsformen kann der dritte dichte Block 814 vierundzwanzig dichte Schichten 842 aufweisen. Der dritte dichte Block 814 kann eingerichtet sein, um die von dem zweiten Übergangsblock 812 ausgegebene Merkmalskarte mit 16x16x192 Merkmalen zu verarbeiten und um eine Merkmalskarte mit 16x16x768 Merkmalen auszugeben.

Das neuronale Netzwerk 800 einen dritten Übergangsblock 816 aufweisen. Der dritte Übergangsblock 816 kann entsprechend dem Übergangsblock 860 eingerichtet sein. Gemäß verschiedenen Ausführungsformen kann der dritte Übergangsblock 816 eingerichtet sein, um die von dem dritten dichten Block 814 ausgegebene Merkmalskarte mit 16x16x768 Merkmalen zu verarbeiten und um eine Merkmalskarte mit 8x8x384 Merkmalen auszugeben.

Das neuronale Netzwerk 800 einen vierten dichten Block 818 aufweisen. Der vierte dichte Block 818 kann entsprechend dem dichten Block 840 eingerichtet sein. Gemäß verschiedenen Ausführungsformen kann der vierte dichte Block 818 sechzehn dichte Schichten 842 aufweisen. Der vierte dichte Block 818 kann eingerichtet sein, um die von dem dritten Übergangsblock 816 ausgegebene Merkmalskarte mit 8x8x384 Merkmalen zu verarbeiten und um eine Merkmalskarte mit 8x8x512 Merkmalen auszugeben.

Das neuronale Netzwerk 800 kann ferner einen Regressionsblock 820 aufweisen. Ein beispielhafter Regressionsblock 820 ist in **FIG. 8G** dargestellt. Der Regressionsblock 820 kann eine Batch-Normalisierungs-Schicht 872 aufweisen. Der Regressionsblock 820 kann ferner eine erste Aktivierungsfunktions-Schicht 874 aufweisen. Die erste Aktivierungsfunktions-Schicht 874 kann auf die Batch-Normalisierungs-Schicht 872 folgen. Die erste Aktivierungsfunktions-Schicht 874 kann eine ReLU-Aktivierungsfunktion aufweisen. Der Regressionsblock 820 kann ferner eine Ausroll-Schicht 876 (engl.; flattening layer) aufweisen. Die Ausroll-Schicht 876 kann auf die erste Aktivierungsfunktions-Schicht 874 folgen. Anschaulich kann die Ausroll-Schicht 876 eingerichtet sein, um die von der ersten Aktivierungsfunktions-Schicht 874 bereitgestellte Merkmalskarte von einer Matrix in eine Reihe umzuwandeln. Anschaulich kann die Ausroll-Schicht 876 eingerichtet sein, um mindestens eine Dimension der verarbeiteten Merkmalskarte auf "1" zu ändern. Der Regressionsblock 820 kann ferner eine erste vollständig verbundene Schicht 878 (engl.: fully connected layer) aufweisen. Die erste vollständig verbundene Schicht 878 kann auf die Ausroll-Schicht 876 folgen. Der Regressionsblock 820 kann ferner eine zweite vollständig verbundene Schicht 880 aufweisen. Die zweite vollständig verbundene Schicht 880 kann auf die erste vollständig verbundene Schicht 878 folgen. Der Regressionsblock 820 kann ferner eine zweite Aktivierungsfunktions-Schicht 882 aufweisen. Die zweite Aktivierungsfunktions-Schicht 882 kann auf die zweite vollständig verbundene Schicht 880 folgen. Die zweite Aktivierungsfunktions-Schicht 882 kann eine Sigmoid-Aktivierungsfunktion (z.B. sigmoidale Aktivierungsfunktion) aufweisen.

Der Regressionsblock 820 kann eingerichtet sein, um die von dem vierten dichten Block 818 ausgegebenen Daten zu verarbeiten. Der Regressionsblock 820 kann eingerichtet sein, um die von dem vierten dichten Block 818 ausgegebene Merkmalskarte mit 8x8x512 Merkmalen zu verarbeiten und um eine Merkmalskarte mit 1x19 Merkmalen auszugeben.

Wie oben beschrieben kann das verarbeitete Amplitudenbild 802 N=10 Moden aufweisen und das neuronale Netzwerk 800 kann eingerichtet sein, um Modeninformationen für die N=10 Moden zu ermitteln. In dem Fall, in dem die Grundmode gleich "0" ist, kann das neuronale Netzwerk 800 eingerichtet sein, um eine Anzahl, N-1, von Phaseninformationen 824 zu ermitteln und um eine Anzahl, N, von Amplituden 822 zu ermitteln. Zum Beispiel kann das neuronale Netzwerk 800 eingerichtet sein, um für die N=10 Moden N=10 Amplituden 822 und N-1=9 Phaseninformationen 824 zu ermitteln. Gemäß verschiedenen Ausführungsformen kann die von dem Regressionsblock 820 ausgegebene Merkmalskarte mit 1x19 Merkmalen die N=10 Amplituden 822 und die N-1=9 Phaseninformationen 824 aufweisen. Die ausgegebene Merkmalskarte mit den 1x19 Merkmalen kann ein Merkmalsvektor sein.

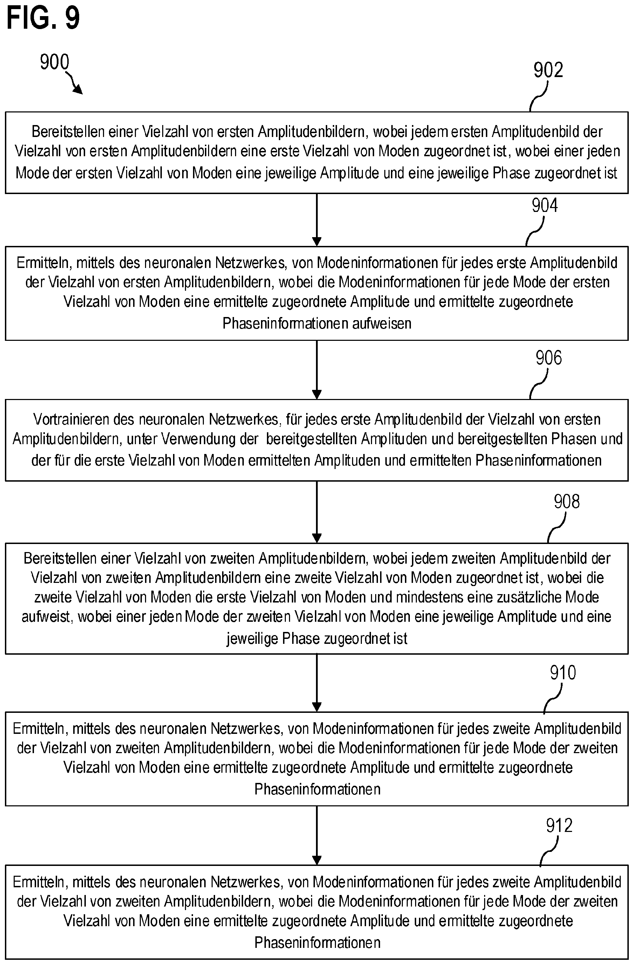

**FIG. 9** zeigt ein Verfahren 900 zum computergestützten Trainieren eines neuronalen Netzwerks gemäß verschiedenen Ausführungsformen. Gemäß verschiedenen Ausführungsformen kann das Verfahren 900 ein Transfer-Lern-Verfahren (engl.: transfer learning) zum Trainieren eines neuronalen Netzwerks sein.

Das Verfahren 900 kann ein Bereitstellen einer Vielzahl von ersten Amplitudenbildern aufweisen (in 902). Jedem ersten Amplitudenbild der Vielzahl von ersten Amplitudenbildern kann eine erste Vielzahl von Moden zugeordnet sein. Für jedes erste Amplitudenbild der Vielzahl von ersten Amplitudenbildern kann einer jeden Mode der ersten Vielzahl von Moden eine jeweilige Amplitude und eine jeweilige Phase zugeordnet sein.

Das Verfahren 900 kann ein Ermitteln von ersten Modeninformationen für jedes erste Amplitudenbild der Vielzahl von ersten Amplitudenbildern mittels des neuronalen Netzwerkes aufweisen (in 904). Die ersten Modeninformationen können für jede Mode der ersten Vielzahl von Moden eine ermittelte zugeordnete Amplitude und ermittelte zugeordnete Phaseninformationen aufweisen.

Das Verfahren 900 kann ein Vortrainieren des neuronalen Netzwerks für jedes erste Amplitudenbild der Vielzahl von ersten Amplitudenbildern unter Verwendung der für die erste Vielzahl von Moden bereitgestellten Amplituden und bereitgestellten Phasen und der für die erste Vielzahl von Moden ermittelten Amplituden und ermittelten Phaseninformationen (in 906). Die einer jeweiligen Mode der Vielzahl von Moden zugeordneten Phaseninformationen können beispielsweise einen Kosinuswert der Phase aufweisen.

Das Verfahren 900 kann ein Bereitstellen einer Vielzahl von zweiten Amplitudenbildern aufweisen (in 908). Jedem zweiten Amplitudenbild der Vielzahl von zweiten Amplitudenbildern kann eine zweite Vielzahl von Moden zugeordnet sein. Die zweite Vielzahl von Moden kann die erste Vielzahl von Moden und ein oder mehrere zusätzliche Moden aufweisen. Für jedes zweite Amplitudenbild der Vielzahl von zweiten Amplitudenbildern kann einer jeden Mode der zweiten Vielzahl von Moden eine jeweilige Amplitude und eine jeweilige Phase zugeordnet sein.

Das Verfahren 900 kann ein Ermitteln von zweiten Modeninformationen für jedes zweite Amplitudenbild der Vielzahl von zweiten Amplitudenbildern mittels des neuronalen Netzwerkes aufweisen (in 910). Die zweiten Modeninformationen können für jede Mode der zweiten Vielzahl von Moden eine ermittelte zugeordnete Amplitude und ermittelte zugeordnete Phaseninformationen aufweisen.

Das Verfahren 900 kann ein Trainieren des neuronalen Netzwerks für jedes zweite Amplitudenbild der Vielzahl von zweiten Amplitudenbildern unter Verwendung der für die zweite Vielzahl von Moden bereitgestellten Amplituden und bereitgestellten Phasen und der für die zweite Vielzahl von Moden ermittelten Amplituden und ermittelten Phaseninformationen (in 912). Die einer jeweiligen Mode der Vielzahl von Moden zugeordneten Phaseninformationen können beispielsweise einen Kosinuswert der Phase aufweisen.

## Patentansprüche

1. Empfangsvorrichtung (100), aufweisend:
• eine Wellenleiter-Schnittstelle (102), die eingerichtet ist zum:
∘ Empfangen eines vermischten Lichtstrahls (104) von einem optischen Multimode-Wellenleiter, wobei der vermischte Lichtstrahl eine zumindest teilweise überlagerte Vielzahl von Lichtstrahlen aufweist, wobei jeder Lichtstrahl der Vielzahl von Lichtstrahlen eine zugeordnete Mode einer Vielzahl von Moden mit einer zugeordneten Amplitude und einer zugeordneten Phase aufweist;
∘ Empfangen eines vermischten verschobenen Lichtstrahls (106) von dem optischen Multimode-Wellenleiter, wobei der vermischte verschobene Lichtstrahl eine zumindest teilweise überlagerte Vielzahl von verschobenen Lichtstrahlen aufweist, wobei jeder verschobene Lichtstrahl der Vielzahl von verschobenen Lichtstrahlen einem Lichtstrahl der Vielzahl von Lichtstrahlen zugeordnet ist, wobei der einem jeweiligen Lichtstrahl zugeordnete verschobene Lichtstrahl die zugeordnete Mode mit der zugeordneten Amplitude und einer zugeordneten verschobenen Phase aufweist, wobei die verschobene Phase von der Phase des Lichtstrahls verschieden ist;
• ein oder mehrere Prozessoren (108), die eingerichtet sind zum:
∘ Ermitteln von Modeninformationen (114) für den vermischten Lichtstrahl (104) unter Verwendung eines trainierten neuronalen Netzwerkes (110), wobei die Modeninformationen für jede Mode der Vielzahl von Moden die zugeordnete Amplitude und zugeordnete Phaseninformationen aufweisen;
∘ Ermitteln von verschobenen Modeninformationen (116) für den vermischten verschobenen Lichtstrahl (106) unter Verwendung des trainierten neuronalen Netzwerkes (110), wobei die verschobenen Modeninformationen für jede Mode der Vielzahl von Moden die zugeordnete Amplitude und zugeordnete verschobene Phaseninformationen aufweisen;
∘ Ermitteln, für jede Mode der Vielzahl von Moden, der jeweils zugeordneten Phase (118) des Lichtstrahls der Vielzahl von Lichtstrahlen unter Verwendung der zugeordneten Phaseninformationen des Lichtstrahls und der zugeordneten verschobenen Phaseninformationen des verschobenen Lichtstrahls.

2. Empfangsvorrichtung (100) nach Anspruch 1, ferner aufweisend: eine Bildgebungsvorrichtung, die eingerichtet ist zum Bereitstellen von Lichtbilddaten für den empfangenen vermischten Lichtstrahl.

3. Empfangsvorrichtung (100) nach Anspruch 2, wobei das Ermitteln von Modeninformationen für den vermischten Lichtstrahl (104) ein Ermitteln von Modeninformationen für die Lichtbilddaten unter Verwendung des trainierten neuronalen Netzwerkes (110) aufweist.

4. Empfangsvorrichtung (100) nach Anspruch 2 oder 3, wobei die Bildgebungsvorrichtung ferner eingerichtet ist zum Bereitstellen von verschobenen Lichtbilddaten für den empfangenen vermischten verschobenen Lichtstrahl.

5. Empfangsvorrichtung (100) nach Anspruch 4, wobei das Ermitteln von verschobenen Modeninformationen für den vermischten verschobenen Lichtstrahl (106) ein Ermitteln von verschobenen Modeninformationen für die verschobenen Lichtbilddaten unter Verwendung des trainierten neuronalen Netzwerkes (110) aufweist.

6. Empfangsvorrichtung (100) nach einem der Ansprüche 1 bis 5, wobei jeder Lichtstrahl der Vielzahl von Lichtstrahlen eine jeweilige erste Frequenz aufweist und wobei der einem jeweiligen Lichtstrahl zugeordnete verschobene Lichtstrahl eine zweite Frequenz aufweist, wobei die zweite Frequenz von der ersten Frequenz verschieden ist.

7. Empfangsvorrichtung (100) nach einem der Ansprüche 1 bis 6, wobei die Phaseninformationen eines jeweiligen Lichtstrahls der Vielzahl von Lichtstrahlen einen Kosinuswert der zugeordneten Phase aufweisen.

8. Empfangsvorrichtung (100) nach einem der Ansprüche 1 bis 7, wobei die verschobenen Phaseninformationen eines jeweiligen verschobenen Lichtstrahls der Vielzahl von verschobenen Lichtstrahlen einen Kosinuswert der zugeordneten verschobenen Phase aufweisen.

9. Empfangsvorrichtung (100) nach Anspruch 7 und 8, wobei das Ermitteln, für jede Mode der Vielzahl von Moden, der jeweils zugeordneten Phase des Lichtstrahls unter Verwendung der zugeordneten Phaseninformationen des Lichtstrahls und der zugeordneten verschobenen Phaseninformationen des verschobenen Lichtstrahls ein Ermitteln, für jede Mode der Vielzahl von Moden, der jeweils zugeordneten Phase des Lichtstrahls unter Verwendung des Kosinuswerts der zugeordneten Phase des Lichtstrahls und des Kosinuswerts der zugeordneten verschobenen Phase des verschobenen Lichtstrahls aufweist.

10. Empfangsvorrichtung (100) nach Anspruch 9, wobei das Ermitteln, für jede Mode der Vielzahl von Moden, der jeweils zugeordneten Phase des Lichtstrahls unter Verwendung des Kosinuswerts der zugeordneten Phase des Lichtstrahls und des Kosinuswerts der zugeordneten verschobenen Phase des verschobenen Lichtstrahls ein Ermitteln, für jede Mode der Vielzahl von Moden, der jeweils zugeordneten Phase des Lichtstrahls unter Verwendung einer Richtungsänderung zwischen dem Kosinuswert der zugeordneten Phase des Lichtstrahls und dem Kosinuswert der zugeordneten verschobenen Phase des verschobenen Lichtstrahls aufweist.

11. Empfangsvorrichtung (100) nach Anspruch 10, wobei die jeweils zugeordnete Phase des Lichtstrahls für den Kosinuswert der zugeordneten Phase des Lichtstrahls mittels der Arkuskosinus-Funktion ermittelt wird, und wobei die Richtungsänderung das Vorzeichen der Arkuskosinus-Funktion angibt.

12. Empfangsvorrichtung (100) nach einem der Ansprüche 1 bis 11, wobei die Vielzahl von Moden eine Grundmode aufweist, wobei die Phase der Grundmode gleich "0" ist.

13. Empfangsvorrichtung (100) nach Anspruch 12,
wobei die Phaseninformationen für jede Mode der Vielzahl von Moden relative Phaseninformationen in Bezug auf die Grundmode aufweisen; und/oder
wobei die verschobenen Phaseninformationen für jede Mode der Vielzahl von Moden relative Phaseninformationen in Bezug auf die Grundmode aufweisen.

14. Verfahren (600) zum Ermitteln von Übertragungseigenschaften eines optischen Wellenleiters, das Verfahren aufweisend:
• Empfangen eines vermischten Lichtstrahls von dem optischen Wellenleiter, wobei der vermischte Lichtstrahl eine zumindest teilweise überlagerte Vielzahl von Lichtstrahlen aufweist, wobei jeder Lichtstrahl der Vielzahl von Lichtstrahlen eine zugeordnete Mode einer Vielzahl von Moden mit einer zugeordneten Amplitude und einer zugeordneten Phase aufweist (in 602);
• Ermitteln, mittels eines trainierten neuronalen Netzwerkes, von Modeninformationen für den empfangenen vermischten Lichtstrahl, wobei die Modeninformationen für jede Mode der Vielzahl von Moden die zugeordnete Amplitude und zugeordnete Phaseninformationen aufweisen (in 604);
• Empfangen eines vermischten verschobenen Lichtstrahls von dem optischen Wellenleiter, wobei der vermischte verschobene Lichtstrahl eine zumindest teilweise überlagerte Vielzahl von verschobenen Lichtstrahlen aufweist, wobei jeder verschobene Lichtstrahl der Vielzahl von verschobenen Lichtstrahlen einem Lichtstrahl der Vielzahl von Lichtstrahlen zugeordnet ist, wobei der einem jeweiligen Lichtstrahl zugeordnete verschobene Lichtstrahl die zugeordnete Mode mit der zugeordneten Amplitude und einer zugeordneten verschobenen Phase aufweist, wobei die verschobene Phase von der Phase des Lichtstrahls verschieden ist (in 606);
• Ermitteln, mittels des trainierten neuronalen Netzwerkes, von verschobenen Modeninformationen für den vermischten verschobenen Lichtstrahl, wobei die verschobenen Modeninformationen für jede Mode der Vielzahl von Moden die zugeordnete Amplitude und zugeordnete verschobene Phaseninformationen aufweisen (in 608); und
• Ermitteln, für jede Mode der Vielzahl von Moden, die jeweils zugeordnete Phase des Lichtstrahls unter Verwendung der zugeordneten Phaseninformationen des Lichtstrahls und der zugeordneten verschobenen Phaseninformationen des verschobenen Lichtstrahls (in 610).

15. Verfahren (900) zum computergestützten Trainieren eines neuronalen Netzwerkes, aufweisend:
• Bereitstellen einer Vielzahl von ersten Amplitudenbildern, wobei jedem ersten Amplitudenbild der Vielzahl von ersten Amplitudenbildern eine erste Vielzahl von Moden zugeordnet ist, wobei, für jedes erste Amplitudenbild der Vielzahl von ersten Amplitudenbildern, einer jeden Mode der ersten Vielzahl von Moden eine jeweilige Amplitude und eine jeweilige Phase zugeordnet ist (in 902);
• Ermitteln, mittels des neuronalen Netzwerkes, von Modeninformationen für jedes erste Amplitudenbild der Vielzahl von ersten Amplitudenbildern, wobei die Modeninformationen für jede Mode der ersten Vielzahl von Moden eine ermittelte zugeordnete Amplitude und ermittelte zugeordnete Phaseninformationen aufweisen (in 904);
• Vortrainieren des neuronalen Netzwerkes, für jedes erste Amplitudenbild der Vielzahl von ersten Amplitudenbildern, unter Verwendung der für die erste Vielzahl von Moden bereitgestellten Amplituden und bereitgestellten Phasen und der für die erste Vielzahl von Moden ermittelten Amplituden und ermittelten Phaseninformationen (in 906);
• Bereitstellen einer Vielzahl von zweiten Amplitudenbildern, wobei jedem zweiten Amplitudenbild der Vielzahl von zweiten Amplitudenbildern eine zweite Vielzahl von Moden zugeordnet ist, wobei die zweite Vielzahl von Moden die erste Vielzahl von Moden und mindestens eine zusätzliche Mode aufweist, wobei, für jedes zweite Amplitudenbild der Vielzahl von zweiten Amplitudenbildern, einer jeden Mode der zweiten Vielzahl von Moden eine jeweilige Amplitude und eine jeweilige Phase zugeordnet ist (in 908);
• Ermitteln, mittels des neuronalen Netzwerkes, von Modeninformationen für jedes zweite Amplitudenbild der Vielzahl von zweiten Amplitudenbildern, wobei die Modeninformationen für jede Mode der zweiten Vielzahl von Moden eine ermittelte zugeordnete Amplitude und ermittelte zugeordnete Phaseninformationen aufweisen (in 910);
• Trainieren des neuronalen Netzwerkes, für jedes zweite Amplitudenbild der Vielzahl von zweiten Amplitudenbildern, unter Verwendung der für die zweite Vielzahl von Moden bereitgestellten Amplituden und bereitgestellten Phasen und der für die zweite Vielzahl von Moden ermittelten Amplituden und ermittelten Phaseninformationen (in 912).
